# EUROPEAN PATENT APPLICATION

(11) **EP 4 311 298 A1**
(43) Date of publication of application: **24.01.2024**
(21) Application number: 22783903.2
(22) Date of filing: 28.03.2022
(51) Int. Cl.: H04W 28/06

(54) **COMMUNICATION METHOD, AND DEVICE**

(30) Priority: 09.04.2021 CN 202110382419; 11.06.2021 CN 202110652968
(71) Applicant: Huawei Technologies Co., Ltd., Longgang Shenzhen, Guangdong 518129 (CN)
(72) Inventor: JIN, Hui, Shenzhen, Guangdong 518129 (CN); DOU, Fenghui, Shenzhen, Guangdong 518129 (CN)
(74) Representative: Pfenning, Meinig & Partner mbB
(86) International application number: PCT/CN2022/083416
(87) International publication number: WO 2022/213836

(57) **Abstract**

A communication method and device are disclosed. First information of a data packet that fails to be transmitted in a first QoS flow is determined. Some or all of the data packet that fails to be transmitted is discarded, and a sequence number is reset for an unsent data packet, so that the sequence number of the unsent data packet and a sequence number of a successfully sent data packet are consecutive. If the first QoS flow includes a data packet that fails to be transmitted, some or all of the data packet may be discarded. This is equivalent to skipping retransmitting a discarded data packet. In this way, a quantity of times of retransmission performed by a transmit end does not reach a maximum quantity of times of retransmission, so that a transport layer connection between the transmit end and a receive end can be retained to a maximum extent. In addition, because some data packets are discarded, the transmit end may reset a sequence number of an unsent data packet, so that the sequence number of the unsent data packet and a sequence number of a successfully sent data packet are consecutive. In this way, the transport layer connection between the transmit end and the receive end can also be retained to a maximum extent.

## Description

### CROSS-REFERENCE TO RELATED APPLICATIONS

This application claims priority to Chinese Patent Application No. 202110382419.8, filed with the China National Intellectual Property Administration on April 9, 2021 and entitled "INFORMATION SENDING METHOD, TERMINAL, AND NETWORK DEVICE", which is incorporated herein by reference in its entirety. This application claims priority to Chinese Patent Application No. 202110652968.2, filed with the China National Intellectual Property Administration on June 11, 2021 and entitled "COMMUNICATION METHOD AND DEVICE", which is incorporated herein by reference in its entirety.

### TECHNICAL FIELD

This application relates to the field of communications technologies, and in particular, to a communication method and device.

### BACKGROUND

Extended reality (extended reality, XR) is an environment that integrates the real world and a virtual world and supports human-computer interaction and that is generated by using a computer technology and a wearable device, and is a collective term for various forms such as augmented reality (augmented reality, AR), virtual reality (virtual reality, VR), and mixed reality (mixed reality, MR). The XR can implement "immersive" experience of seamless switching between a virtual world and the real world through fusion of visual interaction technologies.

An XR service is usually transmitted between a network device and a terminal device in a form of a "frame". Each frame represents a static image, and a frame may be transmitted through a plurality of internet protocol (internet protocol, IP) packets. If a problem such as a network failure occurs during transmission, a receive end may fail to receive an IP packet. If the receive end receives an IP packet, the receive end may send an acknowledgement (ACK) to a transmit end. If the transmit end does not receive an ACK from the receive end, the transmit end retransmits a corresponding IP packet. When a quantity of times of retransmission performed by the transmit end reaches a maximum quantity of times of retransmission, if the transmit end still does not receive an ACK from the receive end, the transmit end interrupts a transport layer connection, for example, a transmission control protocol (transmission control protocol, TCP) connection, from the receive end. In this case, the transmit end and the receive end are disconnected from each other. If transmission needs to be resumed, a transport layer connection, for example, a TCP connection, needs to be re-established, and a process is complex.

### SUMMARY

Embodiments of this application provide a communication method and device, to reduce a probability that a transport layer connection between a transmit end and a receive end is interrupted, and improve data transmission efficiency.

According to a first aspect, a first communication method is provided. The method may be performed by a terminal device, or may be performed by a larger device including a terminal device, or may be performed by a chip system or another functional module, where the chip system or the functional module can implement a function of a terminal device. Alternatively, the method may be performed by a network device, or may be performed by a chip system or another functional module, where the chip system or the functional module can implement a function of a network device. For example, the network device is a core network device, for example, a UPF. Alternatively, for example, the network device is a server, for example, an application server, or an intermediate server connected between an application server and a core network. The method includes: determining first information of a data packet that fails to be transmitted in a first QoS flow; and discarding some or all of the data packet that fails to be transmitted, and resetting a sequence number of an unsent data packet, so that the sequence number of the unsent data packet and a sequence number of a successfully sent data packet are consecutive.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When a network is recovered, a data packet can still be transmitted through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, because some data packets are discarded, the transmit end may reset a sequence number of an unsent data packet, so that the sequence number of the unsent data packet and a sequence number of a successfully sent data packet are consecutive. For the receive end, because data packets with consecutive sequence numbers are received, the receive end may continuously perform reception without waiting for a discarded data packet. In this way, the transport layer connection between the transmit end and the receive end can also be retained to a maximum extent.

With reference to the first aspect, in a first optional implementation of the first aspect, the method further includes: discarding a remaining data packet corresponding to a frame corresponding to the data packet that fails to be transmitted, where the remaining data packet is a data packet, other than the data packet that fails to be transmitted, of all data packets corresponding to the frame. An XR application is used as an example. The XR service has the following feature: If one of data packets corresponding to a frame fails to be transmitted, a receive end may fail to parse the entire frame. In other words, even if a remaining data packet in the frame is transmitted, this makes little sense, and transmission resources are wasted. Therefore, in this embodiment of this application, if a data packet that fails to be transmitted corresponds to a frame, some data packets of the frame are data packets that fail to be transmitted, and a remaining data packet of the frame (for example, a data packet that has not been successfully transmitted and a data packet that has not been transmitted among the data packets corresponding to the frame) has not been transmitted, the remaining data packet of the frame may be discarded without being transmitted, to reduce data transmission load and save transmission resources.

With reference to the first aspect or the first optional implementation of the first aspect, in a second optional implementation of the first aspect, data of a first application is transmitted in the first QoS flow and a second QoS flow, and a data packet transmitted in the first QoS flow is less important than a data packet transmitted in the second QoS flow. In this embodiment of this application, the data packet transmitted in the second QoS flow is more important. Therefore, a transmission success rate for the second QoS flow can be ensured to a maximum extent. The data packet transmitted in the first QoS flow is less important. Therefore, when the network fails, a corresponding data packet transmitted in the first QoS flow may be discarded, to alleviate network congestion and other problems.

With reference to the first aspect, the first optional implementation of the first aspect, or the second optional implementation of the first aspect, in a third optional implementation of the first aspect, the first information includes (or indicates) one or more of the following information: a frame number of the frame corresponding to the data packet that fails to be transmitted, a type of the frame corresponding to the data packet that fails to be transmitted, a location of the data packet that fails to be transmitted in the frame, a quantity of data packets that fail to be transmitted, or the TCP layer sequence numbers or the IP layer sequence numbers of the M data packets, where the M data packets are the data packet that fails to be transmitted, or all the data packets corresponding to the frame corresponding to the data packet that fails to be transmitted. The first information may indicate information about the data packet that fails to be transmitted, for example, indicate the sequence numbers of the M data packets, indicate the quantity of data packets that fail to be transmitted, and/or the like. The first information may alternatively indicate information about the frame corresponding to the data packet that fails to be transmitted, for example, indicate one or more of the frame number of the frame corresponding to the data packet that fails to be transmitted, the type of the frame corresponding to the data packet that fails to be transmitted, or the location of the data packet that fails to be transmitted in the frame. Content indicated by the first information is flexible.

With reference to any one of the first aspect or the first optional implementation of the first aspect to the third optional implementation of the first aspect, in a fourth optional implementation of the first aspect, the determining first information of a data packet that fails to be transmitted in a first QoS flow includes: receiving the first information; or determining the first information based on a data sending status of the first QoS flow; or receiving second information of the data packet that fails to be transmitted in the first QoS flow, and determining the first information based on the second information. For example, if the method is performed by a server, the first information is sent by a UPF to the server. For another example, if the method is performed by UE, the UE is the transmit end of the data packet, and the UE can correspondingly determine the first information based on the data sending status of the first QoS flow. The data sending status of the first QoS flow includes, for example, a data packet discarding status of the first QoS flow. For still another example, if the method is performed by a UPF, the UPF may receive the second information from an access network device, and determine the first information based on the second information.

With reference to the fourth optional implementation of the first aspect, in a fifth optional implementation of the first aspect, the second information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or sequence numbers of GTP packet headers corresponding to the M data packets, where the M data packets are the data packet that fails to be transmitted, or all the data packets corresponding to the frame corresponding to the data packet that fails to be transmitted. The second information may alternatively indicate information about the frame corresponding to the data packet that fails to be transmitted, for example, indicate one or more of the frame number of the frame corresponding to the data packet that fails to be transmitted, the type of the frame corresponding to the data packet that fails to be transmitted, or the location of the data packet that fails to be transmitted in the frame. Content indicated by the second information is flexible.

With reference to the fifth optional implementation of the first aspect, in a sixth optional implementation of the first aspect, the second information includes the sequence numbers of the GTP packet headers corresponding to the M data packets, and the determining the first information based on the second information includes: mapping the sequence numbers of the GTP packet headers to the TCP layer sequence numbers or the IP layer sequence numbers to obtain the first information, where the first information includes the TCP layer sequence numbers or the IP layer sequence numbers of the M data packets. For example, the method is performed by the UPF, and the access network device may send the second information to the UPF. However, the second information sent by the access network device indicates the sequence numbers of the GTP packet headers corresponding to the M data packets, and cannot indicate the TCP layer sequence numbers or the IP layer sequence numbers corresponding to the M data packets. In this case, the UPF may map the sequence numbers of the GTP packet headers to the TCP layer sequence numbers or the IP layer sequence numbers.

With reference to any one of the first aspect or the first optional implementation of the first aspect to the sixth optional implementation of the first aspect, in a seventh optional implementation of the first aspect, the method further includes: retransmitting N data packets in the second QoS flow, where the N data packets belong to the data packet that fails to be transmitted, and the N data packets are some data packets corresponding to a frame of image of the first application. For example, the data packet that fails to be transmitted includes N data packets, the N data packets are some data packets corresponding to a frame of image of the first application, and a remaining data packet corresponding to the frame of image has been successfully transmitted. In this case, to ensure output quality of the frame of image to a maximum extent, the server may retransmit the N data packets to the UE. To increase a retransmission success rate for the N data packets, the server may retransmit the N data packets in the second QoS flow, in other words, the server retransmits the N data packets through a second TCP connection. After receiving the N data packets, the UPF retransmits the N data packets to the UE in the second QoS flow, where N is a positive integer. The server may discard all data packets, other than the N data packets, that are included in the data packet that fails to be transmitted. In this manner, network congestion and other situations can be alleviated, and output quality of more frames can also be ensured to a maximum extent.

With reference to any one of the first aspect or the first optional implementation of the first aspect to the seventh optional implementation of the first aspect, in an eighth optional implementation of the first aspect, the method further includes: sending the unsent data packet when it is determined that the network is recovered to a normal state; or sending the unsent data packet when a first timer expires. If it is determined that the network is recovered to a normal state, transmission may be resumed, to continue to send the unsent data packet. Alternatively, if the maintained first timer expires, transmission may also be resumed, to continue to send the unsent data packet. The unsent data packet has been renumbered. Therefore, a sequence number of the unsent data packet and a sequence number (a TCP layer sequence number or an IP layer sequence number) of a data packet successfully received by the receive end are consecutive. In this case, the receive end does not wait for a data packet that fails to be transmitted. This reduces a probability of disconnection between the transmit end and the receive end.

According to a second aspect, a second communication method is provided. The method may be performed by a network device, or may be performed by a chip system or another functional module, where the chip system or the functional module can implement a function of a network device. For example, the network device is a core network device, for example, a UPF. The method includes: sending a first request to an access network device, where the first request requests to subscribe to transmission information of a first QoS flow, and the transmission information of the first QoS flow indicates that transmission of the first QoS flow fails, or indicates a data packet that fails to be transmitted in the first QoS flow.

With reference to the second aspect, in a first optional implementation of the second aspect, data of a first application is transmitted in the first QoS flow and a second QoS flow, and quality of service of the first QoS flow is lower than that of the second QoS flow.

With reference to the second aspect or the first optional implementation of the second aspect, in a second optional implementation of the second aspect, the method further includes: receiving, from the access network device, second information of the data packet that fails to be transmitted in the first QoS flow; determining, based on the second information, first information of the data packet that fails to be transmitted in the first QoS flow; and sending the first information to an application server, where the application server corresponds to the first application.

With reference to the second optional implementation of the second aspect, in a third optional implementation of the second aspect, the second information includes one or more of the following information: a frame number of a frame corresponding to the data packet that fails to be transmitted, a type of the frame corresponding to the data packet that fails to be transmitted, a location of the data packet that fails to be transmitted in the frame, a quantity of data packets that fail to be transmitted, or sequence numbers of GTP packet headers corresponding to M data packets, where the M data packets are the data packet that fails to be transmitted, or all data packets corresponding to the frame corresponding to the data packet that fails to be transmitted.

With reference to the third optional implementation of the second aspect, in a fourth optional implementation of the second aspect, the second information includes the sequence numbers of the GTP packet headers corresponding to the M data packets, and the determining first information based on the second information includes: mapping the sequence numbers of the GTP packet headers to the TCP layer sequence numbers or the IP layer sequence numbers to obtain the first information, where the first information includes the TCP layer sequence numbers or the IP layer sequence numbers of the M data packets.

With reference to the second optional implementation of the second aspect, the third optional implementation of the second aspect, or the fourth optional implementation of the second aspect, in a fifth optional implementation of the second aspect, the first information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or the TCP layer sequence numbers or the IP layer sequence numbers of the M data packets, where the M data packets are the data packet that fails to be transmitted, or all the data packets corresponding to the frame corresponding to the data packet that fails to be transmitted.

For technical effect of the second aspect or the optional implementations of the second aspect, refer to the descriptions of the technical effect of the first aspect or the corresponding implementations.

According to a third aspect, a third communication method is provided. The method may be performed by a terminal device, or may be performed by a larger device including a terminal device, or may be performed by a chip system or another functional module, where the chip system or the functional module can implement a function of a terminal device. Alternatively, the method may be performed by a network device, or may be performed by a chip system or another functional module, where the chip system or the functional module can implement a function of a network device. For example, the network device is a core network device, for example, a UPF. Alternatively, for example, the network device is a server, for example, an application server, or an intermediate server connected between an application server and a core network. The method includes: receiving fifth information from a first communication apparatus, where the fifth information indicates a data packet that the first communication apparatus fails to send in a first QoS flow; and generating a second data packet based on the fifth information, where a sequence number of the second data packet is the same as a sequence number of the data packet that fails to be sent.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When a network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, the transmit end may indicate, to the receive end, information such as the sequence number of the data packet that fails to be sent, and the receive end may generate, based on the information, a data packet whose sequence number is the same as the sequence number of the data packet that fails to be sent, so that the receive end considers that sequence numbers of received data packets are consecutive. In this way, the transport layer connection between the transmit end and the receive end can also be retained to a maximum extent.

With reference to the third aspect, in a first optional implementation of the third aspect, data of a first application is transmitted in the first QoS flow and a second QoS flow, and quality of service of the first QoS flow is lower than that of the second QoS flow. In this embodiment of this application, the data packet transmitted in the second QoS flow is more important. Therefore, a transmission success rate for the second QoS flow can be ensured to a maximum extent. The data packet transmitted in the first QoS flow is less important. Therefore, when the network fails, a corresponding data packet transmitted in the first QoS flow may be discarded, to alleviate network congestion and other problems.

With reference to the third aspect or the first optional implementation of the third aspect, in a second optional implementation of the third aspect, the receiving fifth information includes: receiving the fifth information from the first communication apparatus in the second QoS flow. In this case, the first QoS flow may not be normally transmitted. Therefore, optionally, the fifth information may be sent in the second QoS flow, to increase a sending success rate for the fifth information.

According to a fourth aspect, a communication apparatus is provided. The communication apparatus may be the terminal device according to any one of the first to the third aspects. The communication apparatus has a function of the terminal device. The communication apparatus is, for example, the terminal device, or a functional module in the terminal device, for example, a baseband apparatus or a chip system. Alternatively, the communication apparatus has a function of the network device. The communication apparatus is, for example, the network device, or a functional module in the network device, for example, a baseband apparatus or a chip system. For example, the network device is a core network device, for example, a UPF. Alternatively, for example, the network device is a server, for example, an application server, or an intermediate server connected between an application server and a core network. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be one functional module, and the functional module is referred to as the transceiver unit. The functional module can implement the sending function and the receiving function. Alternatively, the sending unit and the receiving unit may be different functional modules, and the transceiver unit is a collective term for the functional modules.

For example, the processing unit is configured to determine first information of a data packet that fails to be transmitted in a first QoS flow; and the processing unit is further configured to discard some or all of the data packet that fails to be transmitted, and reset a sequence number of an unsent data packet, so that the sequence number of the unsent data packet and a sequence number of a successfully sent data packet are consecutive.

For another example, the transceiver unit (or the sending unit) is configured to send a first request to an access network device, where the first request requests to subscribe to transmission information of a first QoS flow, and the transmission information of the first QoS flow indicates that transmission of the first QoS flow fails, or indicates a data packet that fails to be transmitted in the first QoS flow.

For still another example, the transceiver unit (or the receiving unit) is configured to receive fifth information from a first communication apparatus, where the fifth information indicates a data packet that the first communication apparatus fails to send in a first QoS flow; and the processing unit is configured to generate a second data packet based on the fifth information, where a sequence number of the second data packet is the same as a sequence number of the data packet that fails to be sent.

In an optional implementation, the communication apparatus further includes a storage unit. The processing unit is coupled to the storage unit, and is configured to execute a program or instructions in the storage unit, to enable the communication apparatus to perform a function of the terminal device or the network device according to any one of the first aspect to the third aspect.

According to a fifth aspect, a computer-readable storage medium is provided. The computer-readable storage medium is configured to store a computer program or instructions, and when the computer program or instructions are run, the method performed by the terminal device or the network device in the foregoing aspects is implemented.

According to a sixth aspect, a computer program product including instructions is provided. When the computer program product runs on a computer, the methods in the foregoing aspects are implemented.

### BRIEF DESCRIPTION OF DRAWINGS

FIG. 1 is a schematic diagram of a relationship between a P-frame and an I-frame;
FIG. 2 is a schematic diagram of an application scenario according to an embodiment of this application;
FIG. 3 is a flowchart of a first communication method according to an embodiment of this application;
FIG. 4 is a schematic diagram in which a server divides a service of a first application into two data flows for transmission according to an embodiment of this application;
FIG. 5 is a schematic diagram in which a server sets a sequence number of an unsent data packet according to an embodiment of this application;
FIG. 6 is a flowchart of a second communication method according to an embodiment of this application;
FIG. 7 is a flowchart of a third communication method according to an embodiment of this application;
FIG. 8 is a flowchart of a fourth communication method according to an embodiment of this application;
FIG. 9 is a flowchart of a fifth communication method according to an embodiment of this application;
FIG. 10 is a flowchart of a sixth communication method according to an embodiment of this application;
FIG. 11 is a flowchart of establishing an MPTCP connection according to an embodiment of this application;
FIG. 12 is a schematic block diagram of a terminal device according to an embodiment of this application; and
FIG. 13 is a schematic block diagram of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms or concepts in embodiments of this application, to facilitate understanding by a person skilled in the art.

In embodiments of this application, a terminal device is a device with a wireless transceiver function, and may be a stationary device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self- driving), remote medical (remote medical), a smart grid (smart grid), smart furniture, a smart office, a smart wearable, smart transportation, a smart city (smart city), an uncrewed aerial vehicle, a robot, and the like. Sometimes, the terminal device may be referred to as user equipment (user equipment, UE), a terminal, an access station, a UE station, a remote station, a wireless communication device, a user apparatus, or the like. For ease of description, in embodiments of this application, an example in which the terminal device is UE is used for description.

In embodiments of this application, a network device includes, for example, an access network device and/or a core network device. The access network device is a device with a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in the foregoing communication systems, a future evolved 3rd generation partnership project (3rd generation partnership project, 3GPP) base station, an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in the vehicle-to-everything (vehicle to everything, V2X) technology may be a roadside unit (roadside unit, RSU). An example in which the access network device is a base station is used below for description. The base station may communicate with the terminal device, or may communicate with the terminal device through a relay station. The terminal device may communicate with a plurality of base stations in different access technologies. The core network device is configured to implement a mobility management function, a data processing function, a session management function, a policy and charging function, and the like. Names of devices that implement core network functions in systems using different access technologies may be different. This is not limited in embodiments of this application. A 5G system is used as an example, and the core network device includes an access and mobility management function (access and mobility management function, AMF), a session management function (session management function, SMF), a policy control function (policy control function, PCF), a user plane function (user plane function, UPF), or the like. A 4G system is used as an example, and the core network device includes a mobility management entity (mobility management entity, MME), a serving gateway (serving gateway, SGW), a policy and charging rules function (policy and charging rules function, PCRF), a public data network gateway (public data network gateway, PGW), or the like.

In embodiments of this application, a communication apparatus for implementing a function of a network device may be a network device, or may be an apparatus, for example, a chip system, that can enable a network device to implement the function, where the apparatus may be installed in the network device. In technical solutions provided in embodiments of this application, the technical solutions provided in embodiments of this application are described by using an example in which the apparatus for implementing a function of a network device is a network device.

XR is an environment that integrates the real world and a virtual world and supports human-computer interaction and that is generated by using a computer technology and a wearable device, and is a collective term for various forms such as AR, VR, and MR. The XR can implement "immersive" experience of seamless switching between a virtual world and the real world through fusion of visual interaction technologies. An XR service is usually sent between a network and a terminal device in a form of a "frame". Each frame represents a static image. During actual compression, a data capacity is reduced by using various algorithms. For example, an I-frame indicates a key frame, and may be understood as complete retention of the frame of picture, and decoding can be performed only by using data of the frame (because a complete picture is included); and a P-frame indicates a difference between the frame and a previous key frame (for example, the I-frame), and during decoding, a previously cached picture needs to be superposed on the difference defined by the frame to generate a final picture. During actual transmission, a size of each frame is related to a size and quality (for example, 1080P or 720P) of a picture. Usually, each frame needs to be transmitted by using a plurality of internet protocol (Internet protocol, IP) packets. For example, the I-frame needs to be transmitted by using 100 IP packets, and the P-frame needs to be transmitted by using 40 IP packets.

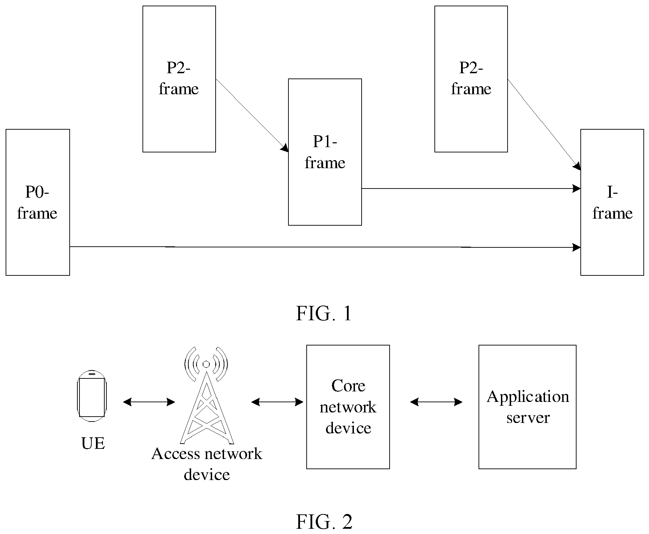

Comparatively, the I-frame is more important than the P-frame. A reason is as follows: When transmission of some P-frames fails, usually, only display of the P-frame is affected, and user experience is short-time stalling. However, if transmission of the I-frame fails, none of subsequent P-frames can be parsed, and the user experiences long-time stalling. FIG. 1 is used as an example. P0 is a P-frame obtained through a great modification on the I-frame, P1 is a frame obtained through a small modification on the I-frame or the PO-frame, and P2 is a P-frame obtained through a small modification on a previous frame (the 1-frame, the PO-frame, or the P1-frame). If the P1-frame or the P2-frame is lost, only display of the frame is affected, and impact is small. However, if the I-frame or the P0-frame is lost, display of subsequent frames is affected, and impact is large.

In embodiments of this application, unless otherwise specified, a quantity of a noun indicates "a singular noun or a plural noun", namely, "one or more". "At least one" indicates one or more, and "a plurality of" indicates two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items" or a similar expression thereof indicates any combination of the items, including one of the items or any combination of a plurality of the items. For example, at least one of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but not to limit a size, content, an order, a time sequence, a priority, or importance of the plurality of objects. For example, first information and second information may be same or different information. In addition, the names do not indicate a difference between content, priorities, importance, or the like of the two pieces of information. In addition, numbers of steps in embodiments described in this application are merely intended to distinguish between different steps, but not to limit a chronological order of the steps. For example, step S301 may be performed before step S302, or may be performed after step S302, or may be performed simultaneously with step S302.

FIG. 2 is a schematic diagram of an application scenario according to an embodiment of this application. In FIG. 2, UE can communicate with a server through an access network device and a core network device. For example, the server is an application server, or the server is an intermediate server. The application server corresponds to an application. For example, that the application server corresponds to an application is understood as that the application server may provide data of the application. For example, an application server corresponding to an XR application can provide data of the XR application. In FIG. 2, the core network device may be directly connected to the application server. Alternatively, another intermediate server may be further connected between the core network device and the application server, and the intermediate server may also serve as the server. For example, the intermediate server includes a content delivery network (content delivery network, CDN) server or a multimedia resource function processor (multimedia resource function processor, MRFP).

The access network device in FIG. 2 corresponds to different devices in different systems. For example, the access network device may correspond to an eNB in a 4G system, and corresponds to a 5G access network device, for example, a gNB, in a 5G system. The core network device in FIG. 2 also corresponds to different devices in different systems. For example, the core network device may correspond to a PGW in the 4G system, and may correspond to a UPF in the 5G system. Certainly, technical solutions provided in embodiments of this application may also be applied to a future mobile communication system. Therefore, the access network device in FIG. 2 may also correspond to an access network device in the future mobile communication system, and the core network device may also correspond to a core network device in the future communication system. In embodiments of this application, for example, the access network device is a base station. Actually, with reference to the foregoing descriptions, the access network device may alternatively be an RSU or other devices.

The following describes a method provided in embodiments of this application with reference to accompanying drawings. In accompanying drawings corresponding to embodiments of this application, all optional steps are indicated by dashed lines. All technical solutions in embodiments of this application can be applied to the network architecture shown in FIG. 2. For example, UE described in embodiments of this application is the UE in the network architecture shown in FIG. 2; a server in embodiments of this application is the application server in the network architecture shown in FIG. 2, or the intermediate server connected between the core network device and the application server; and a UPF in embodiments of this application is the core network device in the network architecture shown in FIG. 2. A "connection" in embodiments of this application may be understood as a transport layer connection, for example, a TCP connection, a user datagram protocol (user datagram protocol, UDP) connection, a fast UDP internet connection (quick UDP internet connection, QUIC), or secure reliable transport (secure reliable transport, SRT). The TCP connection is used as an example during description of embodiments of this application. In addition, an example in which the method in embodiments of this application is applied to a 5G system is used during description of embodiments of this application.

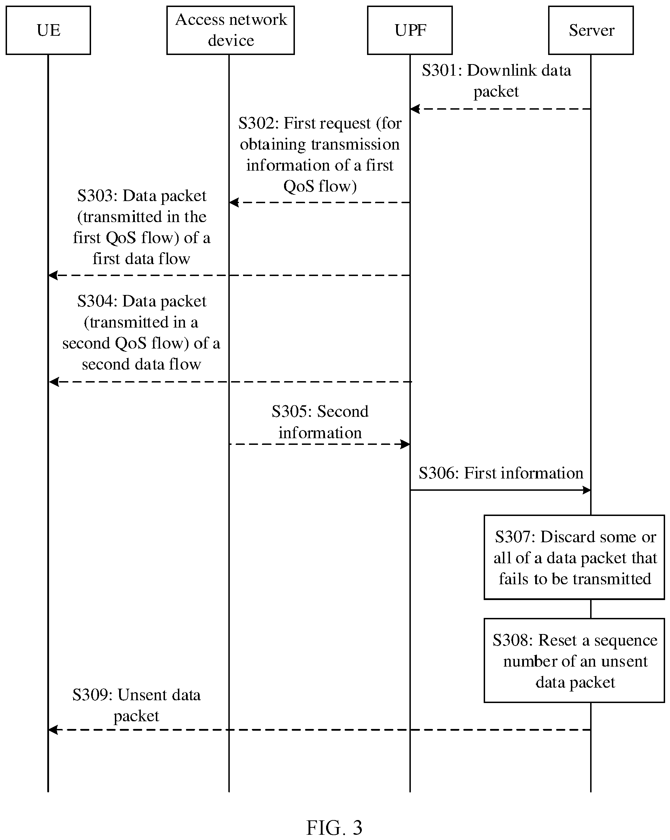

An embodiment of this application provides a communication method. FIG. 3 is a flowchart of the method.

S301: A server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application, a cloud gaming (cloud gaming, CG) application, an image application, or the like.

The XR application is used as an example. An XR service is characterized by a data burst. For example, when the XR service runs at 60 frames/s, a frame of data arrives at an access network device every 16.67 ms, that is, a group of IP packets arrive at the access network device every 16.67 ms, to request the access network device to send the IP packets to UE. If the access network device cannot send the IP packets due to, for example, network congestion, the access network device randomly discards one or more IP data packets of the received group of IP data packets, to alleviate the congestion. If the randomly discarded IP packet belongs to a high-priority frame, for example, belongs to an I-frame or a PO-frame, the packet discarding has large impact on a user. If the discarded IP packet belongs to a low-priority frame, for example, belongs to a P1-frame or a P2-frame, the packet discarding has small impact on the user. However, the access network device discards the packet randomly. Therefore, impact of the packet discarding on the user cannot be controlled. To avoid impact of the random packet discarding by the access network device on the user watching the XR service, hierarchical transmission may be implemented.

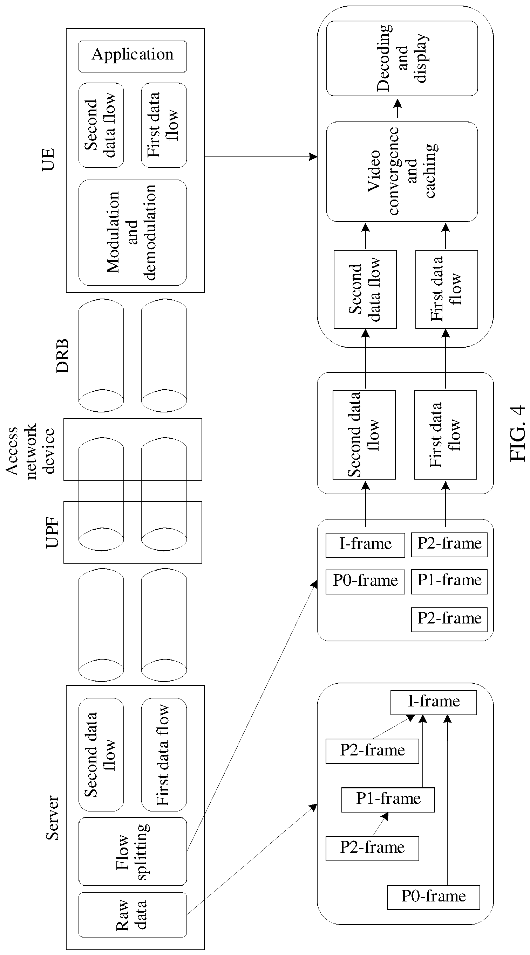

For example, as shown in FIG. 4, the server divides a service of the first application into two data flows (for example, into two socket flows). One data flow is used to transmit a data packet of a more important frame, for example, a data packet of an I-frame and/or a PO-frame, and this data flow may be referred to as a base-layer data flow. The other data flow is used to transmit a data packet of a less important frame, for example, a data packet of a P 1 -frame and/or a P2-frame, and this data flow may be referred to as an enhancement-layer data flow. In embodiments of this application, the data flow may also be referred to as a traffic flow (traffic flow). After the two data flows arrive at a receive end, the receive end processes the data packet of the I-frame and a data packet of a corresponding P-frame, and then performs decoding and display. In this case of flow-based transmission, if the access network device cannot ensure data transmission due to, for example, network congestion, the access network device may preferentially ensure sending of a data packet with a high priority, and discard a data packet with a low priority, to ensure service experience of the user.

The flow-based transmission method may be applied to this embodiment of this application. The server may divide the service of the first application into two data flows for transmission, and the two data flows are transmitted through two TCP connections. That is, two TCP connections may be established between the server and the UE. For example, the two TCP connections are referred to as a first TCP connection and a second TCP connection. The first TCP connection is used to transmit a first data flow, and the second TCP connection is used to transmit a second data flow. The first data flow and the second data flow are data flows of the first application, and the second data flow is more important than the first data flow. The first TCP connection is transmitted in a first QoS flow, and the second TCP connection is transmitted in a second QoS flow. Therefore, this may also be understood as that quality of service of the second QoS flow is higher than quality of service of the first QoS flow. For example, the first application is an XR application. For example, the second data flow is used to transmit a data packet of a more important frame, for example, a data packet of an I-frame and/or a PO-frame, and the first data flow is used to transmit a data packet of a less important frame, for example, a data packet of a P1-frame and/or a P2-frame.

For example, there is one or more downlink data packets, and the one or more downlink data packets are transmitted through the first TCP connection; or there are a plurality of downlink data packets, some of the plurality of downlink data packets are transmitted through the first TCP connection, and a remaining part of the plurality of downlink data packets is transmitted through the second TCP connection.

Optionally, the server may provide, for the UPF, information about a frame corresponding to each data packet. For example, the information provided by the server for the UPF includes one or more of the following: a frame type, a frame number, a total quantity of data packets included in a frame, and a location of a data packet in a frame (for example, a sequence number of the data packet in the frame). For example, the frame type includes an I-frame or a P-frame, or includes an I-frame, a PO-frame, a P1-frame, or a P2-frame. The frame number may also be understood as a number of the frame. For example, a frame 100 indicates that a frame number of the frame is 100. The total quantity of data packets included in a frame is a total quantity of data packets included in one frame, for example, 100 TCP packets or 100 IP packets. For example, the location of a data packet in a frame includes that a data packet is a 5^{th} TCP packet in the frame, or a 5^{th} IP packet in the frame.

S302: The UPF sends a first request to the access network device, and correspondingly, the access network device receives the first request.

After receiving the downlink data packet, the UPF determines that the first TCP connection is transmitted in the first quality of service (quality of service, QoS) flow. The UPF may send the first request to the access network device. The first request may request to obtain transmission information of the first QoS flow. For example, the first request requests to subscribe to the transmission information of the first QoS flow. In this case, the first request may also be referred to as a subscription request. In embodiments of this application, for example, the first request requests to subscribe to the transmission information of the first QoS flow. For example, the transmission information of the first QoS flow indicates that a data packet in the first QoS flow fails to be transmitted, or indicates a data packet that fails to be transmitted in the first QoS flow (for example, indicates a sequence number of the data packet that fails to be transmitted in the first QoS flow). The second TCP connection is transmitted through the second QoS flow. Because the second data flow is more important, it is considered that a success rate for the second data flow needs to be ensured in this embodiment of this application. Therefore, the UPF does not need to subscribe to transmission information of the second QoS flow from the access network device. However, the first data flow is less important, and if a network problem occurs, the access network device may discard a data packet carried in the first QoS flow. Therefore, the UPF may subscribe to the transmission information of the first QoS flow. Alternatively, the UPF may also subscribe to the transmission information of the second QoS flow from the access network device. For example, the UPF may subscribe to the transmission information of the first QoS flow and the transmission information of the second QoS flow by using one first request, or subscribe to the transmission information of the first QoS flow and the transmission information of the second QoS flow by using two first requests respectively. This embodiment of this application mainly focuses on subscription to the transmission information of the first QoS flow.

For example, after receiving the downlink data packet, the UPF determines, based on information such as an IP 5-tuple carried in the downlink data packet, a QoS flow (QoS flow) corresponding to the downlink data packet, and maps the downlink data packet to the QoS flow for transmission. For example, the QoS flow is the first QoS flow or the second QoS flow. For example, the IP 5-tuple carried in the downlink data packet includes a source IP address, a destination IP address, a source port number, a destination port number, and a protocol number of the downlink data packet. The source IP address of the downlink data packet is an IP address of a transmit end of the downlink data packet, for example, is an IP address of the server in this embodiment of this application. The source port number of the downlink data packet is also a port number of the transmit end of the downlink data packet, for example, is a port number of the server. The destination IP address of the downlink data packet is an IP address of a receive end of the downlink data packet, for example, is an IP address of the UE in this embodiment of this application. The destination port number of the downlink data packet is also a port number of the receive end of the downlink data packet, for example, is a port number of the UE. In addition, for example, if the downlink data packet corresponds to the first QoS flow, the UPF may further subscribe to the transmission information of the first QoS flow. For example, the subscription request includes a QoS flow identifier (QoS flow identifier, QFI) of the first QoS flow. Alternatively, even if the UPF does not receive a downlink data packet, the UPF may subscribe to the transmission information of the first QoS flow when determining that the first QoS flow has been established. Therefore, S301 is an optional step.

For example, the UPF sends the first request to an SMF, and then the SMF sends the first request to the access network device, so that the access network device receives the first request. Optionally, after receiving the first request, the access network device may send a response message to the SMF. For example, the response message is referred to as a response message 1. The response message 1 may indicate that the subscription succeeds or fails. After receiving the response message 1 from the access network device, the SMF sends a response message 2 to the UPF. If the response message 1 indicates that the subscription succeeds, the response message 2 indicates that the subscription succeeds. If the response message 1 indicates that the subscription fails, the response message 2 indicates that the subscription fails. After receiving the response message 2 from the SMF, the UPF may determine that the subscription succeeds or the subscription fails. To simplify the accompanying drawing, the response message 1 and the response message 2 are not shown in FIG. 2.

Alternatively, the UPF may directly send the first request to the access network device. For example, the UPF adds a general packet radio service tunneling protocol (general packet radio service tunnel protocol, GTP) packet header to the first request, and sends the first request to the access network device through a user plane, so that the access network device can receive the first request from the UPF. Optionally, after receiving the first request, the access network device may send a response message to the UPF. After receiving the response message from the access network device, the UPF may determine that the subscription succeeds or the subscription fails. To simplify the accompanying drawing, the response message is not shown in FIG. 2.

S303: The UPF transmits a data packet of the first data flow in the first QoS flow. In other words, the UPF transmits a data packet of the first TCP connection in the first QoS flow. For example, the data packet in embodiments of this application is an IP packet or a TCP packet.

Optionally, the UPF may determine information about a frame corresponding to each data packet. The frame information may be provided by the server for the UPF, or may be generated by the UPF. For example, when the XR service runs at 60 frames/s, a frame of data arrives at the UPF every 16.67 ms, that is, a group of IP packets arrive at the UPF every 16.67 ms. In this case, the UPF may generate frame information based on a size and an arrival rule of a data packet.

S304: The UPF transmits a data packet of the second data flow in the second QoS flow. In other words, the UPF transmits a data packet of the second TCP connection in the second QoS flow.

Optionally, the UPF may determine information about a frame corresponding to each data packet. The frame information may be provided by the server for the UPF, or may be generated by the UPF.

For example, the first application is an XR application, the second data flow is used to transmit a data packet of a more important frame, for example, a data packet of an I-frame and/or a PO-frame, and the first data flow is used to transmit a data packet of a less important frame, for example, a data packet of a P1-frame and/or a P2-frame.

S305: The access network device sends second information of a data packet that fails to be transmitted, and correspondingly, the UPF receives the second information of the data packet that fails to be transmitted.

For example, the access network device may send the second information when the access network device detects that a packet loss or a transmission failure occurs in the first QoS flow. The access network device may send the second information to the SMF, and then the SMF sends the second information to the UPF; or the access network device directly sends the second information to the UPF.

For example, the second information includes one or more of the following information (or information indicated by the second information includes one or more of the following information): a frame number of a frame corresponding to the data packet that fails to be transmitted, a type of the frame corresponding to the data packet that fails to be transmitted, a location of the data packet that fails to be transmitted in the frame (for example, a sequence number of the data packet in the frame), a quantity of data packets that fail to be transmitted, and sequence numbers of M data packets (the M data packets may include the data packet that fails to be transmitted, or include all data packets corresponding to the frame corresponding to the data packet that fails to be transmitted, where M is a positive integer). For example, a sequence number, included (or indicated) in the second information, of a data packet is a GTP sequence number corresponding to the data packet (in other words, a sequence number of a GTP packet header corresponding to the data packet that fails to be transmitted).

Optionally, the second information includes (or indicates) a sequence number of the data packet that fails to be transmitted, and does not include (or indicates) the foregoing other information. The second information sent by the access network device may include a GTP packet header. There may be a correspondence between a sequence number (for example, a TCP layer sequence number or an IP layer sequence number) of a data packet transmitted in a QoS flow and a sequence number of a GTP packet header. In this case, after determining the data packet that fails to be transmitted, the access network device may determine a sequence number of a GTP packet header that corresponds to a sequence number of the data packet that fails to be transmitted, and the GTP packet header with the sequence number may be included in the second information.

Optionally, the second information includes (or indicates) one or more of the frame number of the frame corresponding to the data packet that fails to be transmitted, the type of the frame corresponding to the data packet that fails to be transmitted, or the location of the data packet that fails to be transmitted in the frame. For example, the first application is an XR application. The XR service has the following feature: If one of data packets corresponding to a frame fails to be transmitted, a receive end may fail to parse the entire frame. In other words, if one of data packets corresponding to a frame fails to be transmitted, even if a remaining data packet in the frame is transmitted, this makes little sense, and transmission resources are wasted. For example, a frame corresponds to 50 data packets. If one of the 50 data packets fails to be transmitted, the receive end fails to parse the frame. Therefore, in this embodiment of this application, if the access network device determines that the data packet that fails to be transmitted corresponds to a frame, some data packets of the frame are data packets that fail to be transmitted, and a remaining data packet of the frame (for example, a data packet that has not been successfully transmitted and a data packet that has not been transmitted among the data packets corresponding to the frame) has not been transmitted, and if the access network device has received the remaining data packet of the frame, the access network device may discard the remaining data packet of the frame without continuing to transmit the remaining data packet. This reduces data transmission load of the access network device and saves transmission resources. In addition, the access network device may further indicate, to the UPF by using the second information, information about the data packet that fails to be transmitted. For example, the second information includes (or indicates) one or more of the frame number of the frame corresponding to the data packet that fails to be transmitted, the type of the frame corresponding to the data packet that fails to be transmitted, or the location of the data packet that fails to be transmitted in the frame. The access network device may add, to the GTP packet header included in the second information, the information about the data packet that fails to be transmitted, so that the UPF or the server can perform corresponding processing.

For example, if the access network device determines that the data packet that fails to be transmitted corresponds to a frame, some data packets of the frame are data packets that fail to be transmitted, and a remaining data packet of the frame (in other words, a data packet that has not been successfully transmitted and a data packet that has not been transmitted among the data packets corresponding to the frame) has not been transmitted, the second information may include (or indicate) one or more of the frame number of the frame corresponding to the data packet that fails to be transmitted, the type of the frame corresponding to the data packet that fails to be transmitted, or the location of the data packet that fails to be transmitted in the frame, or the second information includes (or indicates) a GTP sequence number of the data packet that fails to be transmitted, or the second information includes (or indicates) GTP sequence numbers of all data packets corresponding to the frame corresponding to the data packet that fails to be transmitted. Alternatively, if the access network device determines that the data packet that fails to be transmitted corresponds to a frame, and some data packets of the frame are data packets that fail to be transmitted, but a remaining data packet of the frame includes a data packet that has been successfully transmitted, the second information may include (or indicate) a GTP sequence number of the data packet that fails to be transmitted.

Optionally, in addition to the second information, the access network device may further send third information, where the third information may indicate timing duration of a first timer. The first timer may also be referred to as a sending stop timer, or may have another name. For example, the first timer is maintained by the UPF or the server. Before the first timer expires, the UPF or the server cannot send a data packet corresponding to the first application. The UPF or the server can continue to send a data packet corresponding to the first application only when the first timer expires. In this manner, network congestion can be alleviated. The timing duration of the first timer may be determined by the access network device. The access network device is clearly aware of a network status. For example, the access network device may determine, based on the network status, time at which normal communication can be resumed. Therefore, the timing duration of the first timer that is determined by the access network device can be accurate. The access network device may send the third information to the UPF through the SMF, or may directly send the third information to the UPF.

Optionally, in addition to the second information, the access network device may further send fourth information. For example, the fourth information indicates a cause of the transmission failure. There may be a plurality of causes of the transmission failure. For example, the cause of the transmission failure includes one or more of the following: network congestion, insufficient network resources, temporary network fluctuation, discarding of a data packet during integrity transmission, discarding of a remaining data packet during integrity transmission, or discarding of a low-priority data packet. Alternatively, in addition to the foregoing one or more causes, the cause of the transmission failure may further include another cause. For example, if the cause of the transmission failure includes the discarding of a low-priority data packet, this may also be considered as indicating, by default, that the cause of the transmission failure is the network congestion, the insufficient network resources, or the like. The access network device may send the fourth information to the UPF through the SMF, or may directly send the fourth information to the UPF.

S306: The UPF sends, to the server, first information of the data packet that fails to be transmitted, and correspondingly, the server receives, from the UPF, the first information of the data packet that fails to be transmitted. For example, the first information includes one or more of the following information (alternatively, for example, the first information indicates one or more of the following information): the frame number of the frame corresponding to the data packet that fails to be transmitted, the type of the frame corresponding to the data packet that fails to be transmitted, the location of the data packet that fails to be transmitted in the frame (for example, the sequence number of the data packet in the frame), the quantity of data packets that fail to be transmitted, and the sequence numbers of the M data packets (the M data packets may include the data packet that fails to be transmitted, or include all the data packets corresponding to the frame corresponding to the data packet that fails to be transmitted). For example, a sequence number, indicated by the first information, of a data packet is a TCP layer sequence number or an IP layer sequence number corresponding to the data packet.

The UPF may record a correspondence between a sequence number (for example, a TCP layer sequence number or an IP layer sequence number) of a data packet and a sequence number of a GTP packet header. After the UPF receives the second information, if the second information includes (or indicates) the sequence number of the GTP packet header corresponding to the data packet that fails to be transmitted, the UPF may map the sequence number, indicated by the second information, of the GTP packet header to a TCP layer sequence number or an IP layer sequence number, to determine the first information. For example, the first information determined by the UPF may include (or indicate) the sequence number of the data packet that fails to be transmitted in the first QoS flow (in other words, the first information is used to determine the sequence number of the data packet that fails to be transmitted in the first QoS flow). For example, the first information includes (or indicates) a TCP layer sequence number or an IP layer sequence number of the data packet.

For another example, if the second information includes (or indicates) the sequence number of the GTP packet header corresponding to the data packet that fails to be transmitted, after mapping the sequence number of the GTP packet header that is included (or indicated) in the second information to a TCP layer sequence number or an IP layer sequence number, the UPF may determine a frame to which a data packet corresponding to the TCP layer sequence number or the IP layer sequence number belongs; or the UPF may determine, based on the sequence number of the GTP packet header that is included (or indicated) in the second information, a frame to which a data packet corresponding to the sequence number of the GTP packet header belongs. In this case, the first information determined by the UPF may include (or indicate) a frame corresponding to the data packet that fails to be transmitted in the first QoS flow (in other words, the first information is used to determine the frame corresponding to the data packet that fails to be transmitted in the first QoS flow). For example, the first information includes (or indicates) one or more of a frame number of the frame corresponding to the data packet that fails to be transmitted in the first QoS flow, a type of the frame corresponding to the data packet that fails to be transmitted, or a location of the data packet that fails to be transmitted in the frame. Alternatively, the UPF may determine sequence numbers (for example, TCP layer sequence numbers or IP layer sequence numbers) of all the data packets corresponding to the frame corresponding to the data packet that fails to be transmitted. In this case, the first information determined by the UPF may include (or indicate) sequence numbers of all data packets corresponding to the frame corresponding to the data packet that fails to be transmitted in the first QoS flow.

Alternatively, if the second information includes (or indicates) the GTP sequence numbers of all the data packets corresponding to the frame corresponding to the data packet that fails to be transmitted, after receiving the second information, the UPF may map sequence numbers of GTP packet headers that are included (or indicated) in the second information to TCP layer sequence numbers or IP layer sequence numbers, to determine the first information. For example, the first information includes (or indicates) TCP sequence numbers or IP sequence numbers of all the data packets corresponding to the frame corresponding to the data packet that fails to be transmitted.

Alternatively, if the second information includes (or indicates) the GTP sequence numbers of all the data packets corresponding to the frame corresponding to the data packet that fails to be transmitted, after receiving the second information, the UPF may determine information about the frame corresponding to the data packet that fails to be transmitted, for example, determine the frame number of the frame corresponding to the data packet that fails to be transmitted and/or the type of the frame corresponding to the data packet that fails to be transmitted, and may use the determined information about the frame corresponding to the data packet that fails to be transmitted as the first information.

Alternatively, if the second information includes (or indicates) information about the frame corresponding to the data packet that fails to be transmitted in the first QoS flow, for example, includes (or indicates) the frame number of the frame corresponding to the data packet that fails to be transmitted in the first QoS flow and/or the type of the frame corresponding to the data packet that fails to be transmitted, after receiving the second information, the UPF may determine that the second information is the first information. To be specific, the first information also includes (or indicates) the information about the frame corresponding to the data packet that fails to be transmitted in the first QoS flow.

Alternatively, if the second information includes (or indicates) information about the frame corresponding to the data packet that fails to be transmitted in the first QoS flow, for example, includes (or indicates) the frame number of the frame corresponding to the data packet that fails to be transmitted in the first QoS flow and/or the type of the frame corresponding to the data packet that fails to be transmitted, after receiving the second information, the UPF may determine sequence numbers (for example, TCP layer sequence numbers or IP layer sequence numbers), included in the second information, of all data packets corresponding to the frame, to determine the first information. For example, the first information includes (or indicates) the sequence numbers of all the data packets corresponding to the frame corresponding to the data packet that fails to be transmitted in the first QoS flow.

After determining the first information, the UPF may send the first information to the server.

Optionally, if the UPF further receives the third information, the UPF may send the timing duration of the first timer to the server, and the server may receive the timing duration of the first timer from the UPF. Alternatively, the UPF may not send the timing duration of the first timer to the server. In this case, the server may autonomously determine timing duration of the first timer. For example, the timing duration may be specified in a protocol, or a default (default) value is used. Alternatively, if the UPF does not send the timing duration of the first timer to the server, the server may not start the first timer.

Optionally, if the UPF further receives the fourth information, the UPF may send the cause of the transmission failure to the server, and the server may learn of the cause of the transmission failure from the UPF. Optionally, the server may determine the timing duration of the first timer based on the cause of the transmission failure.

S307: The server discards some or all of the data packet that fails to be transmitted.

For example, if the server does not receive the cause of the transmission failure from the UPF, the server may directly perform S307. Alternatively, if the server receives the cause of the transmission failure from the UPF, the server may determine, based on the cause of the transmission failure, whether to discard the data packet that fails to be transmitted. In an example, if the cause of the transmission failure is the temporary network fluctuation, the network problem may be temporary, and the network may be recovered within a short time. Therefore, the server may not discard the data packet that fails to be transmitted, but wait until the network is recovered and then continue to send the data packet. In this case, the server does not need to perform S307, and does not need to perform S308 to be described below either. In another example, if the cause of the transmission failure includes one or more of the network congestion, the insufficient network resources, or the discarding of a low-priority data packet, recovery time for the network problem may be long. In this case, to alleviate the problem such as the network congestion or the insufficient resources, the server may discard some or all of the data packet that fails to be transmitted, that is, perform S307.

The server may discard all of the data packet that fails to be transmitted, to alleviate the network congestion and the like to a large extent. Alternatively, the server may choose to discard some of the data packet that fails to be transmitted, and the server may retransmit a remaining data packet to the UE. For example, the data packet that fails to be transmitted includes N data packets, the N data packets are some data packets corresponding to a frame of image of the first application, and a remaining data packet corresponding to the frame of image has been successfully transmitted. In this case, to ensure output quality of the frame of image to a maximum extent, the server may retransmit the N data packets to the UE. To increase a retransmission success rate for the N data packets, the server may retransmit the N data packets in the second QoS flow, in other words, the server retransmits the N data packets. After receiving the N data packets, the UPF retransmits the N data packets to the UE in the second QoS flow, where N is a positive integer. The server may discard all data packets, other than the N data packets, that are included in the data packet that fails to be transmitted. In this manner, network congestion and other situations can be alleviated, and output quality of more frames can also be ensured to a maximum extent. Optionally, the server retransmits the N data packets through the second TCP connection, or the server retransmits the N data packets through the first TCP connection. In addition, the server may further send first indication information to the UPF, and the UPF may map, based on the first indication information, the N data packets to the second QoS flow for transmission. For example, the first indication information is information indicating the UPF to determine to map a data packet to the second QoS flow, for example, is a retransmission indication or a high priority indication. A specific implementation of the first indication information is not limited in this embodiment of this application.

Optionally, the server may alternatively discard a data packet of the frame corresponding to the data packet that fails to be transmitted. For example, the data packet that fails to be transmitted corresponds to a first frame, and all remaining data packets of the first frame are data packets that have not been transmitted, in other words, a data packet that has not been successfully transmitted and a data packet that has not been transmitted in the first frame. In this case, the server may discard the remaining data packets of the first frame. For example, the first information indicates the sequence number of the data packet that fails to be transmitted in the first QoS flow, and the server may only discard some or all of the data packet that fails to be transmitted. Alternatively, in addition to discarding some or all of the data packet that fails to be transmitted, the server further determines the information about the frame corresponding to the data packet that fails to be transmitted. For example, the server determines the first frame. If the first frame includes a data packet that has not been successfully transmitted and a data packet that has not been transmitted, the server may discard a remaining data packet of the first frame (in addition, the server further discards a data packet, corresponding to the first frame, of the data packet that fails to be transmitted). In this case, an unsent data packet no longer includes a data packet of the first frame. For another example, if the first information indicates the information about the frame corresponding to the data packet that fails to be transmitted in the first QoS flow, the server may discard all the data packets corresponding to the frame. For still another example, if the first information indicates the sequence numbers of all the data packets corresponding to the frame corresponding to the data packet that fails to be transmitted in the first QoS flow, the server may discard the data packets indicated by the first information. The data packets may include all or some of the data packet that fails to be transmitted, and/or include a data packet corresponding to the frame corresponding to the data packet that fails to be transmitted in the first QoS flow.

S308: The server resets a sequence number of an unsent data packet, so that the sequence number of the unsent data packet and a sequence number of a successfully sent data packet are consecutive. For example, the unsent data packet is an unsent data packet of a data packet transmitted in the first QoS flow, and a data packet transmitted in the second QoS flow may not be considered. Herein, for example, the sequence number set for the unsent data packet is a TCP layer sequence number or an IP layer sequence number.

In S307, the server discards a corresponding data packet. If the server does not reset a sequence number for the unsent data packet, after the server sends the unsent data packet to the UE, for the UE, a sequence number of a received data packet and a sequence number of a data packet received before the network fails are inconsecutive, and the UE keeps waiting for receiving a data packet that has not been received. For example, sequence numbers of data packets that fail to be transmitted in the first QoS flow are 11 to 20, and the server discards the 10 data packets. For the server, a largest sequence number of a successfully sent data packet is 10, and a smallest sequence number of an unsent data packet is 21. If the server does not reset the sequence number of the unsent data packet, after receiving a data packet 21, the UE keeps waiting for data packets 11 to 20. If the waiting reaches specific duration, a TCP connection between the server and the UE may be interrupted. Therefore, the server may reset the sequence number of the unsent data packet, so that the sequence number of the unsent data packet and the sequence number of the successfully sent data packet are consecutive. For the receive end, because data packets with consecutive sequence numbers are received, the receive end may continuously perform reception without waiting for a discarded data packet. In this way, the TCP connection between the server and the UE can also be retained to a maximum extent. Still refer to the foregoing example. For example, the server resets a sequence number of the unsent data packet 21 to 11, and also sequentially resets sequence numbers of other unsent data packets, so that the sequence numbers of the unsent data packets and the successfully sent data packet are consecutive. In this case, the UE receives a data packet 11 instead of the data packet 21. Because the sequence numbers are consecutive, the UE does not wait for a discarded data packet, so that the TCP connection between the server and the UE can be retained.

However, a requirement for consecutive sequence numbers is a requirement at a TCP layer of the receive end (for example, the UE). After the TCP layer receives data packets, if sequence numbers of the data packets are consecutive, the TCP layer submits the data packets with consecutive sequence numbers to an application layer for processing. The application layer can identify real data included in the data packets, and does not associate the data packets with a non-corresponding frame based on the sequence numbers. For example, the server resets the sequence number of the data packet 21 to 11, the data packet 21 corresponds to a frame B, and a real data packet 11 corresponds to a frame A. After receiving the data packet 11, the application layer of the UE can determine that a frame corresponding to the data packet 11 is the frame B instead of the frame A, so that output disorder is avoided.

If the server discards only some or all data packets that fail to be transmitted in the first QoS flow, and does not discard a remaining data packet corresponding to a frame corresponding to the data packets, the unsent data packet still includes the remaining data packet corresponding to the frame. For example, the data packets that fail to be transmitted in the first QoS flow include data packets 1 to 5 and data packets 12 and 13, the data packets 1 to 5 correspond to a frame A, the data packets 12 and 13 correspond to a frame B, the frame A further corresponds to data packets 6 to 10, and the frame B further corresponds to a data packet 11 and data packets 14 to 20. The server discards the data packets 1 to 5 and the data packets 12 and 13, and does not discard the data packets 6 to 10, the data packet 11, or the data packets 14 to 20. In this case, the data packets 6 to 10, the data packet 11, and the data packets 14 to 20 are unsent data packets, and the server needs to reset sequence numbers of the data packets. Alternatively, if the server not only discards some or all data packets that fail to be transmitted in the first QoS flow, but also discards a remaining data packet corresponding to a frame corresponding to the data packets, the unsent data packet no longer includes the remaining data packet corresponding to the frame. Still refer to the foregoing example. For example, if the server discards data packets 1 to 20, the data packet 11 and the data packets 14 to 20 are not unsent data packets, and the server does not need to set sequence numbers of the data packets.

S309: When it is determined that the network is recovered to a normal state, the server sends the unsent data packet, and correspondingly, the UE receives the data packet. Alternatively, when the first timer expires, the server sends the unsent data packet, and correspondingly, the UE receives the data packet. For example, the unsent data packet is an unsent data packet in the first QoS flow. For example, the server sends, to the UPF through the first TCP connection, the unsent data packet, and then the UPF maps the data packet to the first QoS flow and sends the first QoS flow to the UE. Optionally, that the first timer expires may also be understood as that the first timer has expired (expired) or a countdown of the first timer ends.

For example, if the server receives the timing duration of the first timer from the UPF, the server may start the first timer. For example, the server may start the first timer after receiving the first information, or the server may start the first timer after receiving the timing duration of the first timer. Alternatively, if a protocol specifies the timing duration of the first timer, or the timing duration is a default value, for example, the server starts the first timer after receiving the first information. If the server starts the first timer, before the first timer expires, the server cannot send or stop sending a data packet that is in the first QoS flow and that corresponds to the first application, and the server may continue to send or may not send a data packet that is in the second QoS flow and that corresponds to the first application. When the first timer expires, the server may send, through the first TCP connection, the unsent data packet.

Alternatively, if the server does not receive the timing duration of the first timer from the UPF, the timing duration of the first timer is not specified in the protocol, and the timing duration has no default value, the server may not start the first timer. In this case, if it is determined that the network is recovered, the access network device may send sixth information to the UPF (for example, the access network device directly sends the sixth information to the UPF, or the access network device sends the sixth information to the UPF through the SMF). After receiving the sixth information, the UPF may send the sixth information to the server. After receiving the sixth information, the server can determine that the unsent data packet can be sent through the first TCP connection. The sixth information may indicate that the network is recovered to a normal state, or indicate to send a data packet, or indicate to send a data packet in the first QoS flow, or the like. Optionally, the first information is used for the server to determine that the network is recovered to a normal state.

Alternatively, even if the server starts the first timer, when the access network device determines that the network is recovered to a normal state, if the access network device finds that transmission of the first QoS flow has not been resumed, the access network device may send the sixth information to the UPF, and the UPF may send the sixth information to the server. In this case, the first timer may have not expired, but the server can also determine, based on a notification of the access network device, that the network is recovered to a normal state, so that the server can send, in a timely manner through the first TCP connection, the unsent data packet. In addition, the server may stop the first timer.

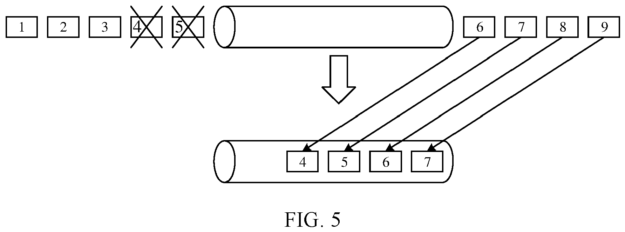

For example, FIG. 5 shows an example of sending unsent data packets by the server. For example, data packets 1, 2, and 3 are data packets that are successfully sent, data packets 4 and 5 are data packets that fail to be transmitted, and data packets 6, 7, 8, and 9 are unsent data packets. If the data packets 4 and 5 are discarded due to a transmission failure, the server resets sequence numbers of the data packets 6, 7, 8, and 9. After the sequence numbers are reset, the data packets 6, 7, 8, and 9 are changed to data packets 4, 5, 6, and 7. In this case, after the network is recovered, the server sends the data packets 4, 5, 6, and 7. Therefore, for the UE, sequence numbers of received data packets are consecutive.

S301 to S305 and S309 are optional steps.

The foregoing steps describe downlink transmission in this embodiment of this application. The following describes uplink transmission in this embodiment of this application.

After an application (APP) that provides the first application at the application layer of the UE generates service data, the APP or an application processor (application processor, AP) encapsulates the service data into a data packet (for example, an IP packet). A modem (modem) of the UE requests a radio resource from the access network device, and sends the data packet to the server through the access network device and the UPF. The UE transmits the data of the first application in a first QoS flow and a second QoS flow. Optionally, the application that provides the first application may also be understood as an application (APP) corresponding to the first application.

For example, the modem of the UE receives, from the application layer, a data packet that needs to be transmitted in the first QoS flow. However, a network problem occurs, for example, the network is congested, or network resources are insufficient, and therefore the modem cannot send the data packet. In this case, the modem may determine, based on a data sending status of the first QoS flow, first information of a data packet that fails to be transmitted, and the modem may send the first information to the application layer of the UE. The data sending status of the first QoS flow may indicate a network status. For example, if a large quantity of data packets of the first QoS flow are lost, the network may be congested, or network resources may be insufficient. Optionally, the modem may further send third information and/or fourth information to the application layer. For content of the information, refer to the foregoing descriptions.

The application layer of the UE (for example, an AP or the APP that is installed on the UE and that provides the first application) may directly discard some or all of the data packet that fails to be transmitted, and optionally, may further discard a remaining data packet corresponding to a frame corresponding to the data packet that fails to be transmitted. Alternatively, the application layer of the UE may determine, based on a cause of the transmission failure, whether to discard the data packet. For content of this part, refer to S307. If the application layer of the UE discards the data packet, the application layer of the UE may reset a sequence number of an unsent data packet. For the content, refer to S308. When the network is recovered, or when a first timer expires, the UE may continue to send the unsent data packet. For the content, refer to S309. A determining manner of determining, by the application layer of the UE, that the network is recovered is as follows: If it is determined that the network is recovered, the modem of the UE may send sixth information to the application layer of the UE. After receiving the sixth information, the application layer of the UE can determine that the network is recovered to a normal state, and therefore the application layer of the UE may send, in the first QoS flow, the unsent data packet. The sixth information may indicate that the network is recovered to a normal state, or indicate to send a data packet, or indicate to send a data packet in the first QoS flow, or the like. Alternatively, even if the application layer of the UE starts the first timer, the modem of the UE may also send the sixth information to the application layer of the UE. For the content, refer to S309.

In this embodiment of this application, for the transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that the transport layer connection between the transmit end and the receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, because some data packets are discarded, the transmit end may reset a sequence number of an unsent data packet, so that the sequence number of the unsent data packet and a sequence number of a successfully sent data packet are consecutive. For the receive end, because data packets with consecutive sequence numbers are received, the receive end may continuously perform reception without waiting for a discarded data packet. In this way, the transport layer connection between the transmit end and the receive end can also be retained to a maximum extent.

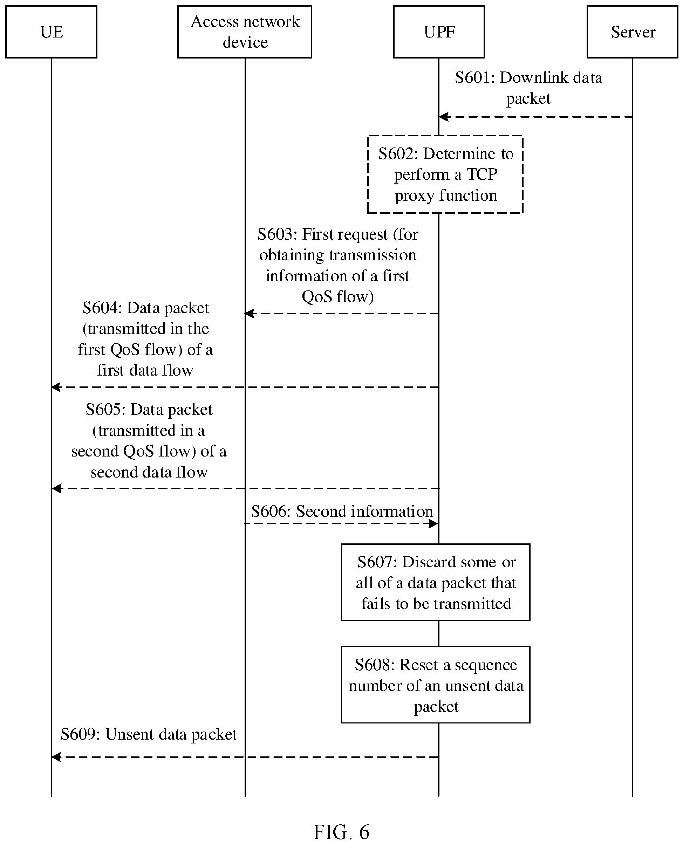

In the downlink transmission process of the embodiment shown in FIG. 3, the server can sense a transmission status of a data packet, so that the server determines whether to discard the data packet, or the like. In this case, an execution process of the server needs to be modified. The following provides a second communication method in an embodiment of this application. In the method, a server does not need to sense a transmission status of a data packet, and a modification to the server is small. FIG. 6 is a flowchart of the method.

S601: The server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application or an image application.

For more content of S601, refer to S301 shown in FIG. 3.

S602: The UPF determines to perform a TCP proxy (proxy) function.

This may be understood as that the UPF acts a TCP proxy to split a TCP connection between UE and the server into two TCP connections. The two TCP connections are a TCP connection between the UE and the UPF and a TCP connection between the UPF and the server. The UE sends an ACK for a received data packet to the UPF, and the UPF does not forward the ACK to the server. After the UPF receives a data packet from the server, the UPF sends an ACK to the server. In this embodiment of this application, there may be a first TCP connection and a second TCP connection between the UE and the server, and each of the two TCP connections may be considered as being split into two TCP connections.

S603: The UPF sends a first request to an access network device, and correspondingly, the access network device receives the first request.

For more content of S603, refer to S302 in the embodiment shown in FIG. 3.

S604: The UPF transmits a data packet of a first data flow in a first QoS flow. In other words, the UPF transmits a data packet of the first TCP connection in the first QoS flow. For example, the data packet in embodiments of this application is an IP packet.

S605: The UPF transmits a data packet of a second data flow in a second QoS flow. In other words, the UPF transmits a data packet of the second TCP connection in the second QoS flow.

For more content of S604 and S605, refer to S303 and S304 in the embodiment shown in FIG. 3.

S606: The access network device sends second information of a data packet that fails to be transmitted, and correspondingly, the UPF receives the second information of the data packet that fails to be transmitted.

For more content of S606, refer to S305 in the embodiment shown in FIG. 3.

S607: The UPF discards some or all of the data packet that fails to be transmitted.

For more content of S607, refer to S307 in the embodiment shown in FIG. 3. However, in the embodiment shown in FIG. 3, S307 is performed by the server, and S607 is performed by the UPF, but execution manners are similar.

S608: The UPF resets a sequence number of an unsent data packet, so that the sequence number of the unsent data packet and a sequence number of a successfully sent data packet are consecutive. For example, the unsent data packet is an unsent data packet of a data packet transmitted in the first QoS flow, and a data packet transmitted in the second QoS flow may not be considered. Herein, for example, the sequence number set for the unsent data packet is a TCP layer sequence number or an IP layer sequence number.

It should be noted that, in this embodiment of this application, the UPF performs the TCP proxy function. Therefore, the server cannot sense a transmission status of a data packet. The server only needs to send a data packet to the UPF. After receiving the data packet, the UPF may send an ACK to the server. In this case, after receiving the ACK, the server may continue to send a data packet to the UPF. For the UPF, if transmission of a data packet fails, the UPF may still keep receiving a data packet from the server, but the data packets may need to be processed as an unsent data packet.

For more content of S608, refer to S308 in the embodiment shown in FIG. 3. However, in the embodiment shown in FIG. 3, S308 is performed by the server, and S608 is performed by the UPF, but execution manners are similar.

S609: When it is determined that a network is recovered to a normal state, the UPF sends the unsent data packet, and correspondingly, the UE receives the data packet. Alternatively, when a first timer expires, the UPF sends the unsent data packet, and correspondingly, the UE receives the data packet. For example, the unsent data packet is an unsent data packet in the first QoS flow. For example, the UPF maps, to the first QoS flow, the unsent data packet, and sends the first QoS flow to the UE.

For more content of S609, refer to S309 in the embodiment shown in FIG. 3. However, in the embodiment shown in FIG. 3, S309 is performed by the server, and S609 is performed by the UPF, but execution manners are similar.

S601 to S606 and S609 are optional steps.

The foregoing steps describe downlink transmission in this embodiment of this application. Uplink transmission in this embodiment of this application is similar to the uplink transmission in the embodiment shown in FIG. 3, and details are not described again.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, because some data packets are discarded, the transmit end may reset a sequence number of an unsent data packet, so that the sequence number of the unsent data packet and a sequence number of a successfully sent data packet are consecutive. For the receive end, because data packets with consecutive sequence numbers are received, the receive end may continuously perform reception without waiting for a discarded data packet. In this way, the transport layer connection between the transmit end and the receive end can also be retained to a maximum extent. In addition, in this embodiment of this application, the UPF acts as a TCP proxy, and the server does not need to sense a data transmission status, but only needs to normally send a data packet. This simplifies an implementation process of the server.

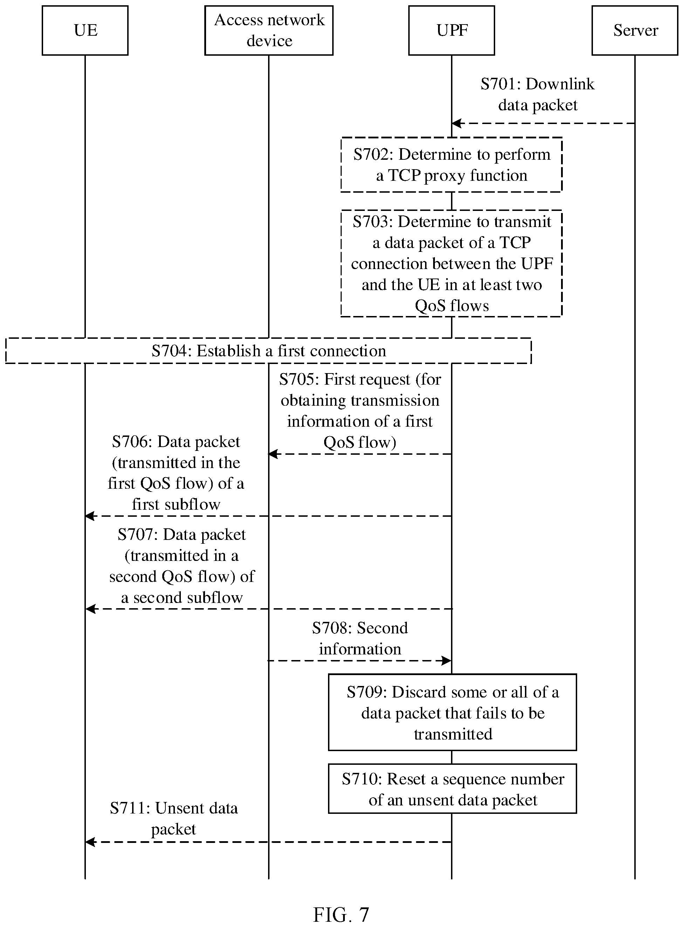

In the embodiment shown in FIG. 3 or the embodiment shown in FIG. 6, two TCP connections are established between the UE and the server to transmit data of the first application, and an implementation of the server needs to be modified. The following describes a third communication method provided in an embodiment of this application. In the method, only one TCP connection needs to be established between UE and a server, and a modification to the server is small. FIG. 7 is a flowchart of the method.

S701: The server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application or an image application.

In this embodiment of this application, only one TCP connection needs to be established between the server and the UE. For data of the first application, regardless of importance, the server sends the data of the first application to the UPF through the TCP connection.

S702: The UPF determines to perform a TCP proxy function.

For more content of S702, refer to S602 in the embodiment shown in FIG. 6.

S703: The UPF determines to transmit a data packet of the TCP connection between the UPF and the UE in at least two QoS flows. In other words, the UPF determines to transmit a data packet of the first application between the UPF and the UE in at least two QoS flows.

For example, the UPF determines that importance of data packets of the first application varies. Some data packets are more important, and some data packets are less important. In this case, the UPF may determine to transmit data packets of the TCP connection between the UPF and the UE in at least two QoS flows. Data packets with different importance are transmitted in different QoS flows, to improve reliability of data transmission. For example, in this embodiment of this application, data packets of the first application are transmitted in two QoS flows, and the two QoS flows include a first QoS flow and a second QoS flow.

S704: The UPF establishes a first connection to the UE.

The first connection may include at least two subflows (subflow), the at least two subflows are transmitted in the at least two QoS flows, and the at least two QoS flows include the first QoS flow. For example, the at least two QoS flows include the first QoS flow and the second QoS flow. For example, the first connection is a multipath TCP (multipath TCP, MPTCP) connection, or may be another connection such as a multipath QUIC (multipath QUIC, MPQUIC) connection. In this embodiment of this application, for example, the first connection is an MPTCP connection.

The MPTCP connection may be understood as including at least two subflows, the at least two subflows are transmitted in the at least two QoS flows, and one subflow is transmitted in one QoS flow. For example, the data packets of the first application are transmitted in the first QoS flow and the second QoS flow. For example, the MPTCP connection includes a first subflow and a second subflow, the first subflow is transmitted in the first QoS flow, and the second subflow is transmitted in the second QoS flow. If no MPTCP connection has been established between the UPF and the UE, S704 may be performed. If an MPTCP connection has been established between the UPF and the UE, S704 does not need to be performed. A process of establishing the MPTCP connection is described in other embodiments below.

An advantage of the MPTCP connection is that data packets transmitted in a plurality of paths can be better managed and controlled, to ensure correct and effective transmission of the data packets. In addition, only one TCP connection needs to be established between the server and the UE. Therefore, a modification to the server is small. This better facilitates commercial promotion.

S705: The UPF sends a first request to an access network device, and correspondingly, the access network device receives the first request.

For more content of S705, refer to S302 in the embodiment shown in FIG. 3.

S706: The UPF transmits a data packet of the first subflow in the first QoS flow. For example, the data packet in embodiments of this application is an IP packet.

S707: The UPF transmits a data packet of the second subflow in the second QoS flow.

For more content of S706 and S707, refer to S303 and S304 in the embodiment shown in FIG. 3.

S708: The access network device sends second information of a data packet that fails to be transmitted, and correspondingly, the UPF receives the second information of the data packet that fails to be transmitted.

For more content of S708, refer to S606 in the embodiment shown in FIG. 3.

S709: The UPF discards some or all of the data packet that fails to be transmitted.

For more content of S709, refer to S307 in the embodiment shown in FIG. 3. However, in the embodiment shown in FIG. 3, S307 is performed by the server, and S709 is performed by the UPF, but execution manners are similar.

S710: The UPF resets a sequence number of an unsent data packet, so that the sequence number of the unsent data packet and a sequence number of a successfully sent data packet are consecutive. For example, the unsent data packet is an unsent data packet of a data packet transmitted in the first QoS flow, and a data packet transmitted in the second QoS flow may not be considered. Herein, for example, the sequence number set for the unsent data packet is a TCP layer sequence number or an IP layer sequence number.

It should be noted that, in this embodiment of this application, the UPF performs the TCP proxy function. Therefore, the server cannot sense a transmission status of a data packet. The server only needs to send a data packet to the UPF. After receiving the data packet, the UPF may send an ACK to the server. In this case, after receiving the ACK, the server may continue to send a data packet to the UPF. For the UPF, if transmission of a data packet fails, the UPF may still keep receiving a data packet from the server, but the data packets may need to be processed as an unsent data packet.

For more content of S710, refer to S308 in the embodiment shown in FIG. 3. However, in the embodiment shown in FIG. 3, S308 is performed by the server, and S710 is performed by the UPF, but execution manners are similar.

S711: When it is determined that a network is recovered to a normal state, the UPF sends the unsent data packet, and correspondingly, the UE receives the data packet. Alternatively, when a first timer expires, the UPF sends the unsent data packet, and correspondingly, the UE receives the data packet. For example, the unsent data packet is an unsent data packet in the first QoS flow. For example, the UPF maps, to the first QoS flow, the unsent data packet, and sends the first QoS flow to the UE.

For more content of S711, refer to S309 in the embodiment shown in FIG. 3. However, in the embodiment shown in FIG. 3, S309 is performed by the server, and S711 is performed by the UPF, but execution manners are similar.

S701 to S708 and S711 are optional steps.

The foregoing steps describe downlink transmission in this embodiment of this application. Uplink transmission in this embodiment of this application is similar to the uplink transmission in the embodiment shown in FIG. 3, and details are not described again.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, because some data packets are discarded, the transmit end may reset a sequence number of an unsent data packet, so that the sequence number of the unsent data packet and a sequence number of a successfully sent data packet are consecutive. For the receive end, because data packets with consecutive sequence numbers are received, the receive end may continuously perform reception without waiting for a discarded data packet. In this way, the transport layer connection between the transmit end and the receive end can also be retained to a maximum extent. In addition, in this embodiment of this application, only one transport layer connection needs to be established between the server and the UE, and a modification to the server is small. In addition, in this embodiment of this application, the UPF acts as a TCP proxy, and the server does not need to sense a data transmission status, but only needs to normally send a data packet. This simplifies an implementation process of the server.

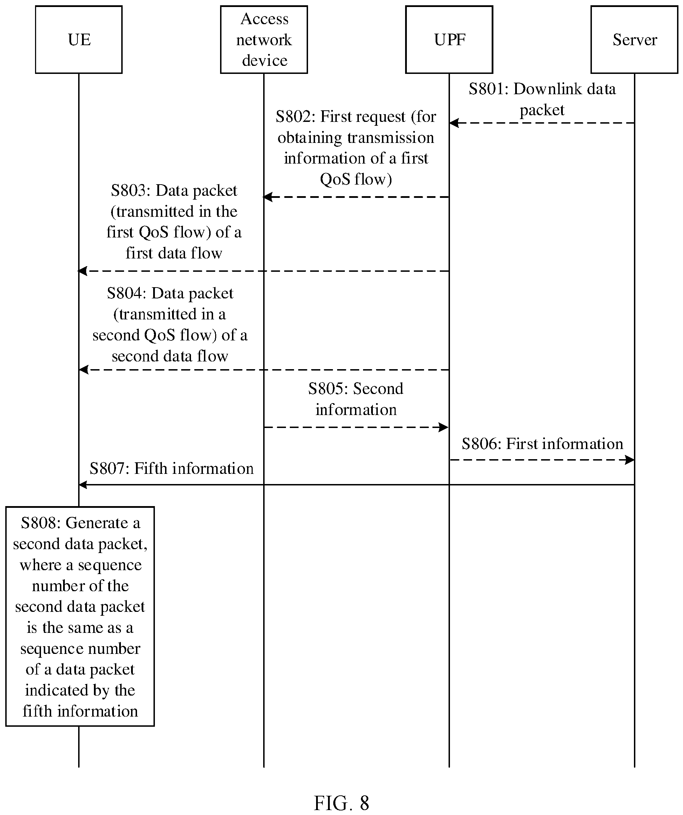

In the foregoing several embodiments, the server or the UPF retains the transport layer connection by discarding the data packet that fails to be transmitted and resetting the sequence number of the unsent data packet. The following provides a fourth communication method provided in an embodiment of this application. In the method, a sequence number of a data packet that has not failed to be sent does not need to be reset, and a receive end may autonomously construct a data packet that fails to be transmitted, so that a transport layer connection can also be retained. FIG. 8 is a flowchart of the method.

S801: A server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application or an image application.

For more content of S801, refer to S301 in the embodiment shown in FIG. 3.

S802: The UPF sends a first request to an access network device, and correspondingly, the access network device receives the first request.

For more content of S802, refer to S302 in the embodiment shown in FIG. 3.

S803: The UPF transmits a data packet of a first data flow in a first QoS flow. In other words, the UPF transmits a data packet of a first TCP connection in the first QoS flow. For example, the data packet in embodiments of this application is an IP packet.

S804: The UPF transmits a data packet of a second data flow in a second QoS flow. In other words, the UPF transmits a data packet of a second TCP connection in the second QoS flow.

For more content of S803 and S804, refer to S303 and S304 in the embodiment shown in FIG. 3.

S805: The access network device sends second information of a data packet that fails to be transmitted, and correspondingly, the UPF receives the second information of the data packet that fails to be transmitted.

For more content of S805, refer to S305 in the embodiment shown in FIG. 3.

S806: The UPF sends, to the server, first information of the data packet that fails to be transmitted, and correspondingly, the server receives, from the UPF, the first information of the data packet that fails to be transmitted.

For more content of S806, refer to S306 in the embodiment shown in FIG. 3.

S807: The server sends fifth information to UE, and correspondingly, the UE receives the fifth information from the server.

The fifth information may indicate sequence numbers of some or all data packets that a first communication apparatus fails to send (in other words, fails to transmit) in the first QoS flow, or the fifth information may be used to determine sequence numbers of some or all data packets that the first communication apparatus fails to send in the first QoS flow. For example, the sequence numbers are TCP layer sequence numbers or IP layer sequence numbers. In this case, for example, the first communication apparatus is the server. For example, the data packets that fail to be transmitted in the first QoS flow include data packets 1 to 5 and data packets 12 and 13, the data packets 1 to 5 correspond to a frame A, the data packets 12 and 13 correspond to a frame B, the frame A further corresponds to data packets 6 to 10, and the frame B further corresponds to a data packet 11 and data packets 14 to 20. The server discards the data packets 1 to 5 and the data packets 12 and 13, and does not discard the data packets 6 to 10, the data packet 11, or the data packets 14 to 20. In this case, the fifth information may indicate sequence numbers of the data packets 1 to 5, and indicate sequence numbers of the data packets 12 and 13, and may not indicate sequence numbers of the data packets 6 to 10, or indicate sequence numbers of the data packet 11 and the data packets 14 to 20.

Alternatively, in addition to discarding some or all data packets that fail to be transmitted, the server further determines a frame corresponding to the data packets that fail to be transmitted, and discards a remaining data packet corresponding to the frame. In this case, the fifth information may indicate sequence numbers of all data packets corresponding to a frame corresponding to some or all data packets that the first communication apparatus fails to send in the first QoS flow, or the fifth information may be used to determine sequence numbers of all data packets corresponding to a frame corresponding to some or all data packets that the first communication apparatus fails to send in the first QoS flow. For example, the sequence numbers are TCP layer sequence numbers or IP layer sequence numbers. In this case, for example, the first communication apparatus is the server. For example, the data packets that fail to be transmitted in the first QoS flow include data packets 1 to 5 and data packets 12 and 13, the data packets 1 to 5 correspond to a frame A, the data packets 12 and 13 correspond to a frame B, the frame A further corresponds to data packets 6 to 10, and the frame B further corresponds to a data packet 11 and data packets 14 to 20. The server discards the data packets 1 to 5 and the data packets 12 and 13, and does not discard the data packets 6 to 10, the data packet 11, or the data packets 14 to 20. In this case, the fifth information may indicate sequence numbers of the data packets 1 to 20.

This may be understood as that the fifth information indicates sequence numbers of all data packets discarded by the server. For example, all the data packets discarded by the server include some or all data packets that fail to be sent, and optionally, further include a remaining data packet corresponding to a frame corresponding to some or all data packets that fail to be sent.

The first communication apparatus is a transmit end of the data packets that fail to be sent. For example, in this embodiment of this application, the first communication apparatus is the server. Optionally, the fifth information may further indicate other information of some or all data packets that fail to be transmitted, for example, a data packet size (size).

In this case, the first TCP connection may not normally perform transmission, in other words, the first QoS flow may not normally perform transmission. Therefore, optionally, the server may send the fifth information to the UE in the second QoS flow. Alternatively, this is understood as that the server sends the fifth information to the UPF through the second TCP connection, and the UPF sends the fifth information to the UE in the second QoS flow. The fifth information is sent through the second TCP connection, so that a sending success rate for the fifth information can be increased.

S808: The UE generates (or constructs) a second data packet based on the fifth information. There may be one or more second data packets.

After receiving the fifth information, the UE (for example, a modem of the UE) may generate the second data packet based on the fifth information. A sequence number of the second data packet is the same as a sequence number of a data packet indicated by the fifth information. For example, the sequence number of the data packet is a TCP layer sequence number or an IP layer sequence number of the data packet. For example, if the fifth information indicates the data packets 1 to 5, a quantity of second data packets generated by the UE is 5, and sequence numbers of the five data packets are 1 to 5. The modem of the UE may send the second data packet to a TCP layer (or referred to as a TCP entity, or referred to as a TCP layer) of the UE, and the TCP layer of the UE considers that a data packet whose sequence number is consecutive to a sequence number of a successfully received data packet is received. The second data packet is certainly not a real data packet, and does not include a real payload (payload) of the data packet indicated by the fifth information, but is merely intended to make the TCP layer of the UE consider that sequence numbers of received data packets are consecutive. An application layer of the UE can identify content of the data packet, and therefore can determine that the data packet does not correspond to any frame of the first application, so that output disorder is avoided.

A difference from the embodiment shown in FIG. 3 lies in that, although the server discards a data packet, because the UE autonomously generates a data packet whose sequence number is the same as a sequence number of the data packet, the server does not need to reset a sequence number of an unsent data packet. When a network is recovered, the server may continue to send the unsent data packet. For a manner of determining, by the server, that the network is recovered, refer to the embodiment shown in FIG. 3. After the network is recovered, the UE receives a previously unsent data packet from the server. Because the UE has constructed a data packet discarded by the server, the TCP layer of the UE considers that the data packet discarded by the server has been received, and the TCP layer of the UE does not wait for receiving the data packet. In addition, a sequence number of the unsent data packet received from the server and a sequence number of a previously successfully received data packet are consecutive. Therefore, the TCP layer of the UE remains at a receiving state, so that a TCP connection between the UE and the server is retained.

S801 to S806 are optional steps.

The foregoing steps describe downlink transmission in this embodiment of this application. The following describes uplink transmission in this embodiment of this application.

After an APP that provides the first application at the application layer of the UE generates service data, the APP or an AP encapsulates the service data into a data packet (for example, an IP packet). The modem of the UE requests a radio resource from the access network device, and sends the data packet to the server through the access network device and the UPF. The UE transmits the data of the first application in a first QoS flow and a second QoS flow.

For example, the modem of the UE receives, from the application layer, a data packet that needs to be transmitted in the first QoS flow. However, a network problem occurs, for example, the network is congested, or network resources are insufficient, and therefore the modem cannot send the data packet. In this case, the modem may determine, based on a data sending status of the first QoS flow, first information of a data packet that fails to be transmitted, and the modem may send the first information to the application layer of the UE. Optionally, the modem may further send third information and/or fourth information to the application layer. For content of the information, refer to the foregoing descriptions.

The application layer of the UE (for example, the AP or the APP that is installed on the UE and that provides the first application) may directly discard some or all of the data packet that fails to be transmitted, and optionally, may further discard a remaining data packet corresponding to a frame corresponding to the data packet that fails to be transmitted. Alternatively, the application layer of the UE may determine, based on a cause of the transmission failure, whether to discard the data packet. For content of this part, refer to S307 in the embodiment shown in FIG. 3. If the application layer of the UE discards a data packet, the UE may send fifth information to the server. For example, the UE sends the fifth information to the server in the second QoS flow. Alternatively, this is understood as that the UE sends the fifth information to the UPF in the second QoS flow, and the UPF sends the fifth information to the server through the second TCP connection. The fifth information is sent through the second TCP connection, so that a sending success rate for the fifth information can be increased. In this case, the first communication apparatus is the UE.

After receiving the fifth information, the server may generate a second data packet based on the fifth information, where a sequence number of the second data packet is the same as a sequence number of a data packet indicated by the fifth information. The server may send the second data packet to a TCP layer (or referred to as a TCP entity, or referred to as a TCP layer) of the server, and the TCP layer of the server considers that a data packet whose sequence number is consecutive to a sequence number of a successfully received data packet is received.

A difference from the embodiment shown in FIG. 3 lies in that, although the UE discards a data packet, because the server autonomously generates a data packet whose sequence number is the same as a sequence number of the data packet, the UE does not need to reset a sequence number of an unsent data packet. When the network is recovered, the UE may continue to send the unsent data packet. For a manner of determining, by the UE, that the network is recovered, refer to the embodiment shown in FIG. 3. After the network is recovered, the server receives a previously unsent data packet from the UE. Because the server has constructed a data packet discarded by the UE, the TCP layer of the server considers that the data packet discarded by the UE has been received, and the TCP layer of the server does not wait for receiving the data packet. In addition, a sequence number of the unsent data packet received from the UE and a sequence number of a previously successfully received data packet are consecutive. Therefore, the TCP layer of the server remains at a receiving state, so that a TCP connection between the UE and the server is retained.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, the transmit end may indicate, to the receive end, information such as the sequence number of the data packet that fails to be sent, and the receive end may generate, based on the information, a data packet whose sequence number is the same as the sequence number of the data packet that fails to be sent, so that the receive end considers that sequence numbers of received data packets are consecutive. In this way, the transport layer connection between the transmit end and the receive end can also be retained to a maximum extent.

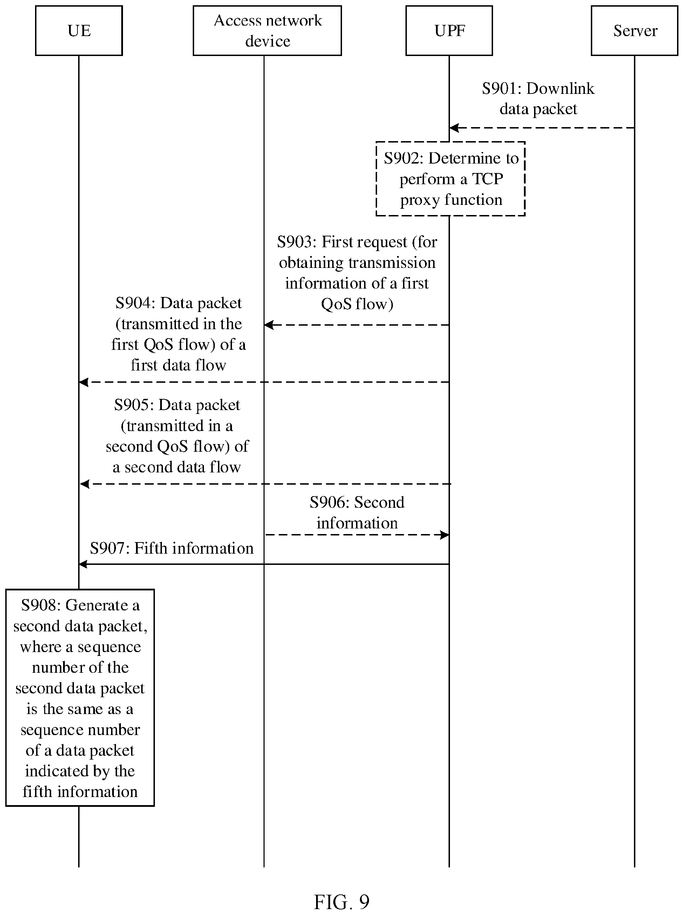

In the downlink transmission process of the embodiment shown in FIG. 8, the server can sense a transmission status of a data packet, so that the server determines whether to discard the data packet, or the like. In this case, an execution process of the server needs to be modified. The following provides a fifth communication method in an embodiment of this application. In the method, a server does not need to sense a transmission status of a data packet, and a modification to the server is small. FIG. 9 is a flowchart of the method.

S901: A server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application or an image application.

For more content of S901, refer to S301 shown in FIG. 3.

S902: The UPF determines to perform a TCP proxy function.

For more content of S902, refer to S302 shown in FIG. 3.

S903: The UPF sends a first request to an access network device, and correspondingly, the access network device receives the first request.

For more content of S903, refer to S302 in the embodiment shown in FIG. 3.

S904: The UPF transmits a data packet of a first data flow in a first QoS flow. In other words, the UPF transmits a data packet of a first TCP connection in the first QoS flow. For example, the data packet in embodiments of this application is an IP packet.

S905: The UPF transmits a data packet of a second data flow in a second QoS flow. In other words, the UPF transmits a data packet of a second TCP connection in the second QoS flow.

For more content of S904 and S905, refer to S303 and S304 in the embodiment shown in FIG. 3.

S906: The access network device sends second information of a data packet that fails to be transmitted, and correspondingly, the UPF receives the second information of the data packet that fails to be transmitted.

For example, the UPF records a correspondence between a sequence number (for example, a TCP layer sequence number or an IP layer sequence number) of a data packet and a sequence number of a GTP packet header. In this case, after receiving the second information, the UPF may map a sequence number, indicated by the second information, of a GTP packet header to a TCP layer sequence number or an IP layer sequence number, and correspondingly obtain first information of a data packet that fails to be transmitted. The first information may indicate a sequence number of a data packet that fails to be transmitted in the first QoS flow. The sequence number, indicated by the first information, of the data packet that fails to be transmitted is a TCP layer sequence number or an IP layer sequence number of the data packet. Optionally, the first information is used for the UPF to determine the sequence number of the data packet that fails to be transmitted in the first QoS flow.

For more content of S906, refer to S305 in the embodiment shown in FIG. 3.

S907: The UPF sends fifth information to UE, and correspondingly, the UE receives the fifth information from the UPF. The fifth information may indicate sequence numbers of some or all data packets that a first communication apparatus fails to send in the first QoS flow, or the fifth information is used to determine sequence numbers of some or all data packets that fail to be sent in the first QoS flow.

Alternatively, the fifth information may indicate sequence numbers of all data packets corresponding to a frame corresponding to some or all data packets that the first communication apparatus fails to send in the first QoS flow, or the fifth information may be used to determine sequence numbers of all data packets corresponding to a frame corresponding to some or all data packets that the first communication apparatus fails to send in the first QoS flow.

In this case, for example, the first communication apparatus is the UPF.

For more content of S907, refer to S807 in the embodiment shown in FIG. 8.

S908: The UE generates a second data packet based on the fifth information, where a sequence number of the second data packet is the same as a sequence number of a data packet indicated by the fifth information. For example, the sequence number of the data packet is a TCP layer sequence number or an IP layer sequence number of the data packet.

For more content of S908, refer to S808 in the embodiment shown in FIG. 8.

S901 to S907 are optional steps.

The foregoing steps describe downlink transmission in this embodiment of this application. The following describes uplink transmission in this embodiment of this application.

After an APP that provides the first application at an application layer of the UE generates service data, the APP or an AP encapsulates the service data into a data packet (for example, an IP packet). A modem of the UE requests a radio resource from the access network device, and sends the data packet to the server through the access network device and the UPF. The UE transmits the data of the first application in a first QoS flow and a second QoS flow.

For example, the modem of the UE receives, from the application layer, a data packet that needs to be transmitted in the first QoS flow. However, a network problem occurs, for example, the network is congested, or network resources are insufficient, and therefore the modem cannot send the data packet. In this case, the modem may determine, based on a data sending status of the first QoS flow, first information of a data packet that fails to be transmitted, and the modem may send the first information to the application layer of the UE. Optionally, the modem may further send third information and/or fourth information to the application layer. For content of the information, refer to the foregoing descriptions.

The application layer of the UE (for example, the AP or the APP that is installed on the UE and that provides the first application) may directly discard some or all of the data packet that fails to be transmitted, and optionally, may further discard a remaining data packet corresponding to a frame corresponding to the data packet that fails to be transmitted. Alternatively, the application layer of the UE may determine, based on a cause of the transmission failure, whether to discard the data packet. For content of this part, refer to S307 in the embodiment shown in FIG. 3. If the application layer of the UE discards a data packet, the UE may send fifth information to the UPF. For example, the UE sends the fifth information to the UPF in the second QoS flow. The fifth information is sent in the second QoS flow, so that a sending success rate for the fifth information can be increased. In this case, the first communication apparatus is the UE.

After receiving the fifth information, the UPF may generate a second data packet based on the fifth information, where a sequence number of the second data packet is the same as a sequence number of a data packet indicated by the fifth information. The UE may send the second data packet to a TCP layer (or referred to as a TCP entity, or referred to as a TCP layer) of the UPF, and the TCP layer of the UPF considers that a data packet whose sequence number is consecutive to a sequence number of a successfully received data packet is received.

A difference from the embodiment shown in FIG. 3 lies in that, although the UE discards a data packet, because the UPF autonomously generates a data packet whose sequence number is the same as a sequence number of the data packet, the UE does not need to reset a sequence number of an unsent data packet. When the network is recovered, the UE may continue to send the unsent data packet. For a manner of determining, by the UE, that the network is recovered, refer to the embodiment shown in FIG. 3. After the network is recovered, the UPF receives a previously unsent data packet from the UE. Because the UPF has constructed a data packet discarded by the server, the TCP layer of the UPF considers that the data packet discarded by the UE has been received, and the TCP layer of the server does not wait for receiving the data packet. In addition, a sequence number of the unsent data packet received from the UE and a sequence number of a previously successfully received data packet are consecutive. Therefore, the TCP layer of the UPF remains at a receiving state, so that a TCP connection between the UE and the UPF is retained, and correspondingly, a TCP connection between the UE and the server is retained.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, the transmit end may indicate, to the receive end, information such as the sequence number of the data packet that fails to be sent, and the receive end may generate, based on the information, a data packet whose sequence number is the same as the sequence number of the data packet that fails to be sent, so that the receive end considers that sequence numbers of received data packets are consecutive. In this way, the transport layer connection between the transmit end and the receive end can also be retained to a maximum extent. In addition, in this embodiment of this application, the UPF acts as a TCP proxy, and the server does not need to sense a data transmission status, but only needs to normally send a data packet. This simplifies an implementation process of the server.

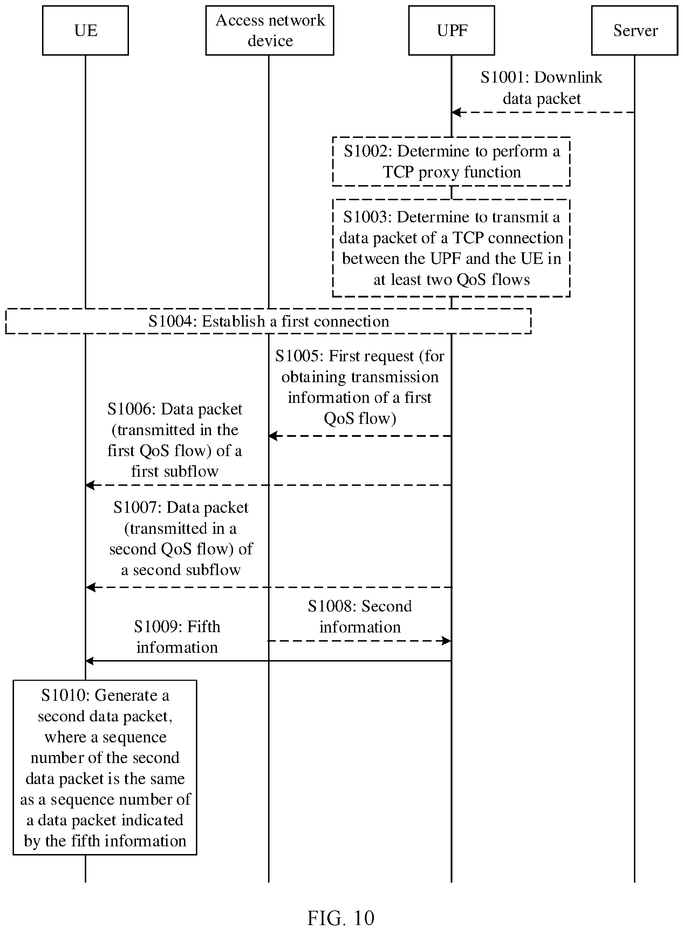

In the embodiment shown in FIG. 8 or the embodiment shown in FIG. 9, two TCP connections are established between the UE and the server to transmit data of the first application, and an implementation of the server needs to be modified. The following describes a sixth communication method provided in an embodiment of this application. In the method, only one transport layer connection needs to be established between UE and a server, and a modification to the server is small. FIG. 10 is a flowchart of the method.

S1001: A server sends a downlink data packet to a UPF, and correspondingly, the UPF receives the downlink data packet from the server. There may be one or more downlink data packets. For example, the downlink data packet is an IP packet. The downlink data packet belongs to a first application. For example, the first application is an XR application, or may be another video application or an image application.

For more content of S1001, refer to S701 in the embodiment shown in FIG. 7.

S1002: The UPF determines to perform a TCP proxy function.

For more content of S1002, refer to S702 in the embodiment shown in FIG. 7.

S1003: The UPF determines to transmit a data packet of the TCP connection between the UPF and the UE in at least two QoS flows. In other words, the UPF determines to transmit a data packet of the first application between the UPF and the UE in at least two QoS flows.

For more content of S1003, refer to S703 in the embodiment shown in FIG. 7.

S1004: The UPF establishes a first connection to the UE.

For more content of S1004, refer to S704 in the embodiment shown in FIG. 7.

S1005: The UPF sends a first request to an access network device, and correspondingly, the access network device receives the first request.

For more content of S1005, refer to S704 in the embodiment shown in FIG. 7.

S1006: The UPF transmits a data packet of the first subflow in the first QoS flow. For example, the data packet in embodiments of this application is an IP packet.

S 1007: The UPF transmits a data packet of the second subflow in the second QoS flow.

For more content of S1006 and S1007, refer to S705 and S706 in the embodiment shown in FIG. 7.

S1008: The access network device sends second information of a data packet that fails to be transmitted, and correspondingly, the UPF receives the second information of the data packet that fails to be transmitted.

For more content of S1008, refer to S707 in the embodiment shown in FIG. 7.

S1009: The UPF sends fifth information to UE, and correspondingly, the UE receives the fifth information from the UPF.

The fifth information may indicate sequence numbers of some or all data packets that a first communication apparatus fails to send in the first QoS flow, or the fifth information is used to determine sequence numbers of some or all data packets that fail to be sent in the first QoS flow.

Alternatively, the fifth information may indicate sequence numbers of all data packets corresponding to a frame corresponding to some or all data packets that the first communication apparatus fails to send in the first QoS flow, or the fifth information may be used to determine sequence numbers of all data packets corresponding to a frame corresponding to some or all data packets that the first communication apparatus fails to send in the first QoS flow.

In this case, for example, the first communication apparatus is the UPF.

For more content of S1009, refer to S807 in the embodiment shown in FIG. 8.

S1010: The UE generates a second data packet based on the fifth information, where a sequence number of the second data packet is the same as a sequence number of a data packet indicated by the fifth information. For example, the sequence number of the data packet is a TCP layer sequence number or an IP layer sequence number of the data packet.

For more content of S1010, refer to S808 in the embodiment shown in FIG. 8.

S1001 to S1008 are optional steps.

The foregoing steps describe downlink transmission in this embodiment of this application. For uplink transmission in this embodiment of this application, refer to the embodiment shown in FIG. 9. Details are not described again.

In this embodiment of this application, for a transmit end, if the first QoS flow includes a data packet that fails to be transmitted, the transmit end may discard some or all of the data packet. This is equivalent to skipping retransmitting a discarded data packet. In this way, a quantity of times of retransmission performed by the transmit end does not reach a maximum quantity of times of retransmission, so that a transport layer connection between the transmit end and a receive end can be retained to a maximum extent. When the network is recovered, the transmit end can still transmit a data packet through the transport layer connection, without re-establishing a transport layer connection, so that data packet transmission efficiency can be improved. In addition, for the receive end, if sequence numbers of received data packets are inconsecutive, the receive end keeps waiting for receiving a data packet that has not been received. If the waiting reaches specific duration, the transport layer connection between the transmit end and the receive end may also be interrupted. Therefore, in this embodiment of this application, the transmit end may indicate, to the receive end, information such as the sequence number of the data packet that fails to be transmitted, and the receive end may generate, based on the information, a data packet whose sequence number is the same as the sequence number of the data packet that fails to be sent, so that the receive end considers that sequence numbers of received data packets are consecutive. In this way, the transport layer connection between the transmit end and the receive end can also be retained to a maximum extent. In addition, in this embodiment of this application, the UPF acts as a TCP proxy, and the server does not need to sense a data transmission status, but only needs to normally send a data packet. This simplifies an implementation process of the server. In addition, in this embodiment of this application, the UPF acts as a TCP proxy, and the server does not need to sense a data transmission status, but only needs to normally send a data packet. This simplifies an implementation process of the server.

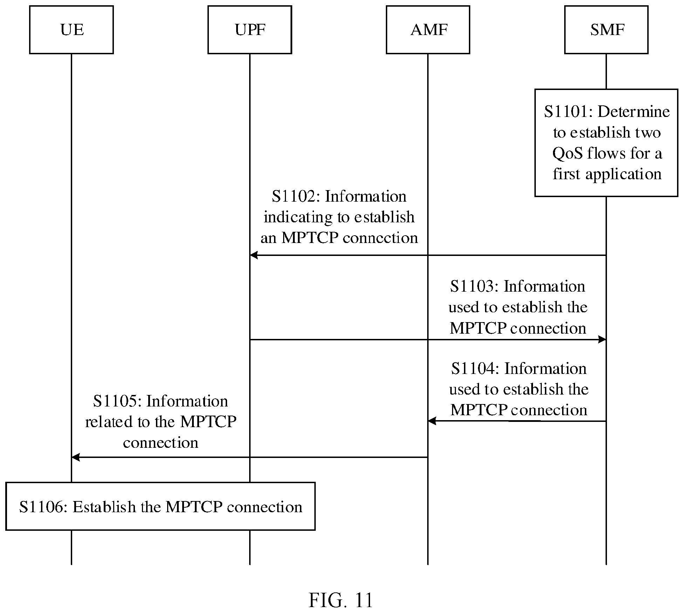

The first connection is established in both the embodiment shown in FIG. 7 and the embodiment shown in FIG. 10. An implementation of the first connection is an MPTCP connection. The following describes a process of establishing an MPTCP connection in an embodiment. FIG. 11 is a flowchart of this embodiment.

S1101: An SMF determines to establish two QoS flows for a first application.

For example, the SMF may determine, based on a type of the first application, to establish two QoS flows for the first application; or the SMF may determine, based on another factor, to establish two QoS flows for the first application.

S1102: The SMF sends a first session modification request (session modification request) message to a UPF, and correspondingly, the UPF receives the first session modification request message from the SMF. The first session modification request message may carry information indicating to establish an MPTCP connection.

S1103: The UPF sends seventh information to the SMF, and correspondingly, the SMF receives the seventh information from the UPF. For example, the seventh information includes information used to establish an MPTCP connection. For example, the seventh information is carried in a first session modification response (session modification response) message. In an example, the seventh information includes two port numbers used by the MPTCP connection, and/or includes information indicating that the UPF supports an MPTCP proxy. The two ports are ports on the UPF, and are used to transmit the MPTCP connection.

For example, the embodiment shown in FIG. 11 is intended to establish an MPTCP connection for the embodiment shown in FIG. 7. For example, if the UPF performs S703, to be specific, the UPF determines to transmit a data packet of the first application between the UPF and UE in at least two QoS flows, the UPF may perform S1103. Otherwise, if the UPF does not perform S703, for example, the UPF determines to transmit a data packet of the first application between the UPF and the UE in one QoS flow, the UPF may not perform S 1103.

S1104: The SMF sends eighth information to the AMF, and correspondingly, the AMF receives the eighth information from the SMF. For example, the eighth information includes the information used to establish the MPTCP connection in S1103.

S1105: The AMF sends ninth information to the UE, and correspondingly, the UE receives the ninth information from the AMF. For example, the ninth information includes information related to the MPTCP connection.

S1106: The UE establishes the MPTCP connection to the UPF based on the information related to the MPTCP connection.

For example, if the UE determines that a data packet of the first application needs to be transmitted in at least two QoS flows, the UE may perform S1106. If the UE determines that a data packet of the first application is to be transmitted in one QoS flow, S1106 does not need to be performed.

In the foregoing process, the MPTCP connection is established between the UE and the UPF. Certainly, this process of establishing the MPTCP connection is merely an example. In this embodiment of this application, the MPTCP connection may alternatively be established in another manner.

Because the embodiment shown in FIG. 11 is an optional embodiment, the steps in FIG. 11 are optional steps, and are represented by solid lines in FIG. 11 for ease of understanding.

To sum up, in the solutions provided in embodiments of this application, a TCP connection between a transmit end and a receive end can be retained to a maximum extent, and after transmission is resumed, an original TCP connection may still be used, without establishing a new TCP connection. This can improve data transmission efficiency, and can also reduce transmission overheads caused by establishment of a new TCP connection.

It should be noted that an example in which a data flow of a first application is transmitted in a first QoS flow and a second QoS flow is used in embodiments of this application. However, in a solution in which a device (including one or more of an access network device, a UPF, a server, or UE, depending on the descriptions of the foregoing embodiments) discards a remaining data packet of a frame corresponding to a data packet that fails to be transmitted, a data flow of the first application may be transmitted in one QoS flow. For example, a first data flow and a second data flow of the first application are transmitted in one QoS flow. In this case, no first connection needs to be established in the embodiment shown in FIG. 7 or FIG. 10.

For example, the first application is an XR application. If a user starts the XR application by using an XR client, a session (for example, a protocol data unit (protocol data unit, PDU) session) is established between the XR client (namely, UE) and a server, and a corresponding QoS flow (for example, a first QoS flow and a second QoS flow) is established, to start to transmit a data packet. In this case, the user can watch an XR video. During video watching, network quality may deteriorate, for example, network congestion occurs. In this case, an access network device may start to discard some data packets transmitted in the first QoS flow. The first QoS flow is used to transmit a data packet corresponding to a P1-frame and/or a P2-frame. Before the network is recovered, the server may not transmit a data packet. For the user, stalling may occur. In addition, because some data packets are lost, quality of a stalling picture may not be good. After the network is recovered, the server may resume transmission in a timely manner because a connection between the XR client and the server is not interrupted. However, because the server renumbers an unsent data packet, or the XR client autonomously constructs a second data packet, a transport layer (for example, a TCP layer) of the XR client considers that no data packet is lost, and continuously receives a data packet, without keeping waiting for a lost data packet to cause a disconnection. In this way, the connection between the XR client and the server is retained. For the user, one or more frames may have poor effect after the recovery, or the user may even find that pictures are inconsecutive, or a frame may be lost. However, after that, a picture is recovered to a normal state, and the picture is recovered quickly. Even if a frame is lost, impact may not be great, so that good user experience can be achieved.

A communication apparatus provided in embodiments of this application is described based on the foregoing method embodiments.

An embodiment of this application provides a communication apparatus. For example, the communication apparatus includes a processing unit and a transceiver unit (or referred to as a communication unit). The processing unit may be configured to implement a processing function of the UE in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11; and the transceiver unit may be configured to implement all or some transceiver functions of the UE in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11. Alternatively, the processing unit may be configured to implement a processing function implemented by the network device in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11; and the transceiver unit may be configured to implement all or some transceiver functions of the network device in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11. For example, the network device is a server or a UPF. For a specific function, refer to the descriptions in the method embodiments.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using a physical apparatus.

An embodiment of this application provides a terminal device. The terminal device (referred to as UE for ease of description) may be used in the foregoing embodiments. The terminal device includes corresponding means (means), units, and/or circuits for implementing functions of the terminal device in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11. For example, the terminal device includes a transceiver module, configured to enable the terminal device to implement a transceiver function; and a processing module, configured to enable the terminal device to process a signal.

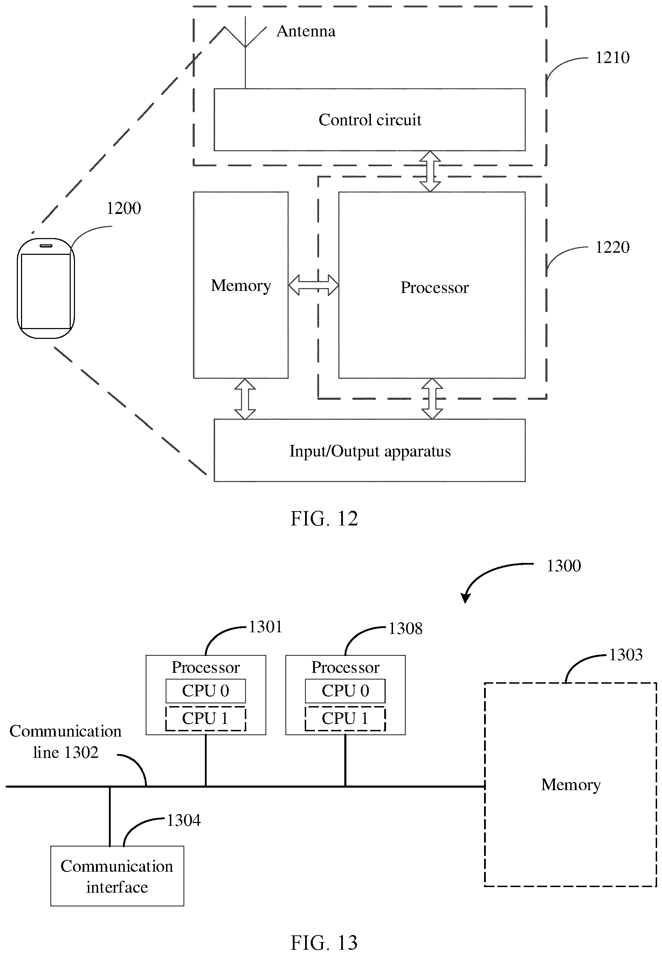

FIG. 12 is a schematic diagram of a structure of a terminal device according to an embodiment of this application.

The terminal device 1200 is applicable to the architecture shown in FIG. 2. For ease of description, FIG. 12 shows only main components of the terminal device 1200. As shown in FIG. 12, the terminal device 1200 includes a processor, a memory, a control circuit, an antenna, and an input/output apparatus. The processor is mainly configured to process a communication protocol and communication data, control the entire terminal device 1200, execute a software program, and process data of the software program. The memory is mainly configured to store the software program and data. The control circuit is mainly configured to perform conversion between a baseband signal and a radio frequency signal, and process a radio frequency signal. The antenna is mainly configured to send and receive a radio frequency signal in a form of an electromagnetic wave. The input/output apparatus, for example, a touchscreen, a display, a microphone, or a keyboard, is mainly configured to receive data entered by a user and output data to the user.

For example, the terminal device 1200 is a mobile phone. After the terminal device 1200 is powered on, the processor may read a software program in a storage unit, interpret and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in a form of an electromagnetic wave through the antenna. When data is sent to the terminal device 1200, the control circuit receives a radio frequency signal through the antenna, converts the radio frequency signal into a baseband signal, and outputs the baseband signal to the processor, and the processor converts the baseband signal into data and processes the data.

A person skilled in the art can understand that, for ease of description, FIG. 12 shows only one memory and one processor. In some embodiments, the terminal device 1200 may include a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device 1200, execute the software program, and process the data of the software program. The processor in FIG. 12 integrates the functions of the baseband processor and the central processing unit. A person skilled in the art can understand that the baseband processor and the central processing unit may alternatively be processors independent of each other, and are interconnected by using a technology such as a bus. The terminal device 1200 may include a plurality of baseband processors to adapt to different network standards. The terminal device 1200 may include a plurality of central processing units to enhance a processing capability of the terminal device 1200. Components of the terminal device 1200 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1210 of the terminal device 1200, and the processor that has a processing function may be considered as a processing unit 1220 of the terminal device 1200. As shown in FIG. 12, the terminal device 1200 includes the transceiver unit 1210 and the processing unit 1220. The transceiver unit may also be referred to as a transceiver, a transceiver device, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. That is, the transceiver unit 1210 includes the receiving unit and the sending unit. For example, the receiving unit may also be referred to as a receiving device, a receiver, a receiving circuit, or the like; and the sending unit may be referred to as a transmitting device, a transmitter, a transmitting circuit, or the like.

FIG. 13 is a schematic diagram of an apparatus according to this application. The apparatus 1300 may be a network device, or a circuit system (for example, a chip system) disposed in a network device. The network device may be used in the foregoing embodiments. The network device includes means (means), units, and/or circuits for implementing functions of, for example, the network device in any one of the embodiment shown in FIG. 3, the embodiment shown in FIG. 6, the embodiment shown in FIG. 7, the embodiment shown in FIG. 8, the embodiment shown in FIG. 9, the embodiment shown in FIG. 10, or the embodiment shown in FIG. 11. For example, the network device includes a transceiver module, configured to enable the network device to implement a transceiver function; and a processing module, configured to enable the network device to process a signal. For example, the network device is the server or the UPF in the foregoing embodiments.

The apparatus 1300 includes at least one processor 1301, a communication line 1302, and at least one communication interface 1304. In an optional implementation, the apparatus 1300 may further include a memory 1303. The memory 1303 is not a necessarily included functional module, but is only an optional functional module, and therefore is indicated by a dashed-line box in FIG. 13.

The processor 1301 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 1302 may include a channel for transmitting information between the foregoing components.

The communication interface 1304 is any apparatus like a transceiver, and is configured to communicate with another device or a communication network such as Ethernet, a radio access network (radio access network, RAN), a wireless local area network (wireless local area network, WLAN), or a wired access network.

The memory 1303 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory 1303 may exist independently, and is connected to the processor 1301 through the communication line 1302. Alternatively, the memory 1303 may be integrated with the processor 1301.

The memory 1303 is configured to store computer-executable instructions for performing the solutions of this application, and the processor 1301 controls execution of the computer-executable instructions. The processor 1301 is configured to execute the computer-executable instructions stored in the memory 1303, to implement the communication methods provided in the foregoing embodiments of this application.

Optionally, the computer-executable instructions in this embodiment of this application may also be referred to as application program code. This is not specifically limited in this embodiment of this application.

During specific implementation, in an embodiment, the processor 1301 may include one or more CPUs, for example, a CPU 0 and a CPU 1 in FIG. 13.

During specific implementation, in an embodiment, the apparatus 1300 may include a plurality of processors, for example, the processor 1301 and a processor 1308 in FIG. 13. Each of the processors may be a single-core (single-CPU) processor, or may be a multi-core (multi-CPU) processor. The processor herein may be one or more devices, circuits, and/or processing cores for processing data (for example, computer program instructions).

When the apparatus shown in FIG. 13 is a chip, for example, a chip of a policy control function network element, a chip of a session management function network element, a chip of a mobility management function network element, a chip of an access network element, or a chip of a terminal device, the chip includes a processor 1301 (the chip may further include a processor 1308), a communication line 1302, a memory 1303, and a communication interface 1304. Specifically, the communication interface 1304 may be an input interface, a pin, a circuit, or the like. The memory 1303 may be a register, a buffer, or the like. The processor 1301 and the processor 1308 each may be a general-purpose CPU, a microprocessor, an ASIC, or one or more integrated circuits for controlling program execution for the communication method in any one of the foregoing embodiments.

A person of ordinary skill in the art may be aware that, in combination with examples described in embodiments disclosed in this specification, units and steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the apparatus embodiments described above are merely examples. For example, the unit division is merely logical function division. The units described as separate parts may or may not be physically separate, and parts shown as units may or may not be physical units, that is, may be located in one place, or may be distributed on a plurality of network units. Some or all of the units may be selected according to actual requirements to achieve objectives of solutions of embodiments.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium accessible to a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, another optical disk storage, a magnetic disk storage medium, another magnetic storage device, or any other medium that can carry or store expected program code in a form of an instruction or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

Embodiment 1: A communication method, including:
determining first information of a data packet that fails to be transmitted in a first quality of service QoS flow; and
discarding some or all of the data packet that fails to be transmitted, and resetting a sequence number of an unsent data packet, so that the sequence number of the unsent data packet and a sequence number of a successfully sent data packet are consecutive.

Embodiment 2: The method according to Embodiment 1, where the method further includes:
discarding a remaining data packet corresponding to a frame corresponding to the data packet that fails to be transmitted, where the remaining data packet is a data packet, other than the data packet that fails to be transmitted, of all data packets corresponding to the frame.

Embodiment 3: The method according to Embodiment 1 or 2, where data of a first application is transmitted in the first QoS flow and a second QoS flow, and a data packet transmitted in the first QoS flow is less important than a data packet transmitted in the second QoS flow.

Embodiment 4: The method according to any one of Embodiments 1 to 3, where the first information includes one or more of the following information: a frame number of the frame corresponding to the data packet that fails to be transmitted, a type of the frame corresponding to the data packet that fails to be transmitted, a location of the data packet that fails to be transmitted in the frame, a quantity of data packets that fail to be transmitted, or transmission control protocol TCP layer sequence numbers or internet protocol IP layer sequence numbers of M data packets, where the M data packets are the data packet that fails to be transmitted, or all the data packets corresponding to the frame corresponding to the data packet that fails to be transmitted.

Embodiment 5: The method according to any one of Embodiments 1 to 4, where the determining first information of a data packet that fails to be transmitted in a first QoS flow includes:
receiving the first information; or
determining the first information based on a data sending status of the first QoS flow; or
receiving second information of the data packet that fails to be transmitted in the first QoS flow, and determining the first information based on the second information.

Embodiment 6: The method according to Embodiment 5, where the second information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or sequence numbers of general packet radio service tunneling protocol GTP packet headers corresponding to the M data packets, where the M data packets are the data packet that fails to be transmitted, or all the data packets corresponding to the frame corresponding to the data packet that fails to be transmitted.

Embodiment 7: The method according to Embodiment 6, where the second information includes the sequence numbers of the GTP packet headers corresponding to the M data packets, and the determining first information based on the second information includes:
mapping the sequence numbers of the GTP packet headers to the TCP layer sequence numbers or the IP layer sequence numbers to obtain the first information, where the first information includes the TCP layer sequence numbers or the IP layer sequence numbers of the M data packets.

Embodiment 8: The method according to any one of Embodiments 1 to 7, where the method further includes:
retransmitting N data packets in the second QoS flow, where the N data packets belong to the data packet that fails to be transmitted, and the N data packets are some data packets corresponding to a frame of image of the first application.

Embodiment 9: The method according to any one of Embodiments 1 to 8, where the method further includes:
sending the unsent data packet when it is determined that a network is recovered to a normal state; or
sending the unsent data packet when a first timer expires.

Embodiment 10: The method according to Embodiment 9, where the determining that a network is recovered to a normal state includes:
receiving sixth information, where the sixth information indicates that the network is recovered to a normal state, or indicates to send a data packet.

Embodiment 11: The method according to Embodiment 9, where the method further includes:
receiving third information, where the third information indicates timing duration of the first timer; or
determining timing duration of the first timer based on the data sending status of the first QoS flow.

Embodiment 12: The method according to any one of Embodiments 1 to 11, where the method further includes:
receiving fourth information, where the fourth information indicates a cause of the transmission failure; or determining a cause of the transmission failure based on the data sending status of the first QoS flow; and
determining, based on the cause of the transmission failure, that some or all of the data packet that fails to be transmitted is to be discarded.

Embodiment 13: The method according to Embodiment 12, where the cause of the transmission failure includes one or more of the following: network congestion, insufficient network resources, or discarding of a low-priority data packet.

Embodiment 14: The method according to any one of Embodiments 1 to 13, where the method further includes:
sending a first request to an access network device, where the first request requests to obtain transmission information of the first QoS flow, and the transmission information of the first QoS flow indicates that a data packet in the first QoS flow fails to be transmitted, or indicates a data packet that fails to be transmitted in the first QoS flow.

Embodiment 15: The method according to any one of Embodiments 1 to 14, where the method further includes:
determining that the data of the first application is transmitted in at least two QoS flows; and
establishing a first connection to a receive end of the at least two QoS flows, where the first connection includes at least two subflows, the at least two subflows are transmitted in the at least two QoS flows, and the at least two QoS flows include the first QoS flow.

Embodiment 16: A communication method, including:
sending a first request to an access network device, where the first request requests to subscribe to transmission information of a first quality of service QoS flow, and the transmission information of the first QoS flow indicates that transmission of the first QoS flow fails, or indicates a data packet that fails to be transmitted in the first QoS flow.

Embodiment 17: The method according to Embodiment 16, where data of a first application is transmitted in the first QoS flow and a second QoS flow, and quality of service of the first QoS flow is lower than that of the second QoS flow.

Embodiment 18: The method according to Embodiment 16 or 17, where the method further includes:
receiving, from the access network device, second information of the data packet that fails to be transmitted in the first QoS flow;
determining, based on the second information, first information of the data packet that fails to be transmitted in the first QoS flow; and
sending the first information to an application server, where the application server corresponds to the first application.

Embodiment 19: The method according to Embodiment 18, where the second information includes one or more of the following information: a frame number of a frame corresponding to the data packet that fails to be transmitted, a type of the frame corresponding to the data packet that fails to be transmitted, a location of the data packet that fails to be transmitted in the frame, a quantity of data packets that fail to be transmitted, or sequence numbers of general packet radio service tunneling protocol GTP packet headers corresponding to M data packets, where the M data packets are the data packet that fails to be transmitted, or all data packets corresponding to the frame corresponding to the data packet that fails to be transmitted.

Embodiment 20: The method according to Embodiment 19, where the second information includes the sequence numbers of the GTP packet headers corresponding to the M data packets, and the determining first information based on the second information includes:
mapping the sequence numbers of the GTP packet headers to transmission control protocol TCP layer sequence numbers or internet protocol IP layer sequence numbers to obtain the first information, where the first information includes the TCP layer sequence numbers or the IP layer sequence numbers of the M data packets.

Embodiment 21: The method according to any one of Embodiments 18 to 20, where the first information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or the TCP layer sequence numbers or the IP layer sequence numbers of the M data packets, where the M data packets are the data packet that fails to be transmitted, or all the data packets corresponding to the frame corresponding to the data packet that fails to be transmitted.

Embodiment 22: A communication method, including:
receiving fifth information from a first communication apparatus, where the fifth information indicates a data packet that the first communication apparatus fails to send in a first quality of service QoS flow; and
generating a second data packet based on the fifth information, where a sequence number of the second data packet is the same as a sequence number of the data packet that fails to be sent.

Embodiment 23: The method according to Embodiment 22, where data of a first application is transmitted in the first QoS flow and a second QoS flow, and quality of service of the first QoS flow is lower than that of the second QoS flow.

Embodiment 24: The method according to Embodiment 22 or 23, where the receiving fifth information includes:
receiving the fifth information from the first communication apparatus in the second QoS flow.

Embodiment 25: A communication apparatus, including:
a processing unit, configured to determine first information of a data packet that fails to be transmitted in a first quality of service QoS flow, where
the processing unit is further configured to discard some or all of the data packet that fails to be transmitted, and reset a sequence number of an unsent data packet, so that the sequence number of the unsent data packet and a sequence number of a successfully sent data packet are consecutive.

Embodiment 26: The communication apparatus according to Embodiment 25, where the processing unit is further configured to discard a remaining data packet corresponding to a frame corresponding to the data packet that fails to be transmitted, where the remaining data packet is a data packet, other than the data packet that fails to be transmitted, of all data packets corresponding to the frame.

Embodiment 27: The communication apparatus according to Embodiment 25 or 26, where data of a first application is transmitted in the first QoS flow and a second QoS flow, and a data packet transmitted in the first QoS flow is less important than a data packet transmitted in the second QoS flow.

Embodiment 28: The communication apparatus according to any one of Embodiments 25 to 27, where the first information includes one or more of the following information: a frame number of the frame corresponding to the data packet that fails to be transmitted, a type of the frame corresponding to the data packet that fails to be transmitted, a location of the data packet that fails to be transmitted in the frame, a quantity of data packets that fail to be transmitted, or transmission control protocol TCP layer sequence numbers or internet protocol IP layer sequence numbers of M data packets, where the M data packets are the data packet that fails to be transmitted, or all the data packets corresponding to the frame corresponding to the data packet that fails to be transmitted.

Embodiment 29: The communication apparatus according to any one of Embodiments 25 to 28, where the communication apparatus further includes a receiving unit, and the processing unit is configured to determine, in the following manner, the first information of the data packet that fails to be transmitted in the first QoS flow:
receiving the first information; or
determining the first information based on a data sending status of the first QoS flow; or
receiving, through the receiving unit, second information of the data packet that fails to be transmitted in the first QoS flow, and determining the first information based on the second information.

Embodiment 30: The communication apparatus according to Embodiment 29, where the second information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or sequence numbers of general packet radio service tunneling protocol GTP packet headers corresponding to the M data packets, where the M data packets are the data packet that fails to be transmitted, or all the data packets corresponding to the frame corresponding to the data packet that fails to be transmitted.

Embodiment 31: The communication apparatus according to Embodiment 30, where the second information includes the sequence numbers of the GTP packet headers corresponding to the M data packets, and the processing unit is configured to determine the first information based on the second information in the following manner: mapping the sequence numbers of the GTP packet headers to the TCP layer sequence numbers or the IP layer sequence numbers to obtain the first information, where the first information includes the TCP layer sequence numbers or the IP layer sequence numbers of the M data packets.

Embodiment 32: The communication apparatus according to any one of Embodiments 25 to 31, where the communication apparatus further includes a sending unit, configured to retransmit N data packets in the second QoS flow (or the processing unit is further configured to retransmit N data packets in the second QoS flow), where the N data packets belong to the data packet that fails to be transmitted, and the N data packets are some data packets corresponding to a frame of image of the first application.

Embodiment 33: The communication apparatus according to any one of Embodiments 25 to 32, where the communication apparatus further includes a sending unit, where
the sending unit is configured to send the unsent data packet when it is determined that a network is recovered to a normal state (or the processing unit is further configured to send the unsent data packet through the sending unit when it is determined that the network is recovered to a normal state); or
the sending unit is configured to send the unsent data packet when a first timer expires (or the processing unit is further configured to send the unsent data packet through the sending unit when the first timer expires).

Embodiment 34: The communication apparatus according to Embodiment 33, where the communication apparatus further includes a receiving unit, and the processing unit is configured to determine, in the following manner, that the network is recovered to a normal state:
receiving sixth information through the receiving unit, where the sixth information indicates that the network is recovered to a normal state, or indicates to send a data packet.

Embodiment 35: The communication apparatus according to Embodiment 33, where the communication apparatus further includes a receiving unit, where
the receiving unit is configured to receive third information (or the processing unit is further configured to receive third information through the receiving unit), where the third information indicates timing duration of the first timer; or
the processing unit is further configured to determine timing duration of the first timer based on the data sending status of the first QoS flow.

Embodiment 36: The communication apparatus according to any one of Embodiments 25 to 35, where the communication apparatus further includes a receiving unit, where
the receiving unit is configured to receive fourth information (or the processing unit is further configured to receive fourth information through the receiving unit), where the fourth information indicates a cause of the transmission failure; or the processing unit is further configured to determine a cause of the transmission failure based on the data sending status of the first QoS flow; and
the processing unit is further configured to determine, based on the cause of the transmission failure, that some or all of the data packet that fails to be transmitted is to be discarded.

Embodiment 37: The communication apparatus according to Embodiment 36, where the cause of the transmission failure includes one or more of the following: network congestion, insufficient network resources, or discarding of a low-priority data packet.

Embodiment 38: The communication apparatus according to any one of Embodiments 25 to 37, where the communication apparatus further includes a sending unit, configured to send a first request to an access network device (or the processing unit is further configured to send a first request to the access network device through the sending unit), where the first request requests to obtain transmission information of the first QoS flow, and the transmission information of the first QoS flow indicates that a data packet in the first QoS flow fails to be transmitted, or indicates a data packet that fails to be transmitted in the first QoS flow.

Embodiment 39: The communication apparatus according to any one of Embodiments 25 to 38, where the processing unit is further configured to:
determine that the data of the first application is transmitted in at least two QoS flows; and
establish a first connection to a receive end of the at least two QoS flows, where the first connection includes at least two subflows, the at least two subflows are transmitted in the at least two QoS flows, and the at least two QoS flows include the first QoS flow.

Embodiment 40: A communication apparatus, including:
a sending unit, configured to send a first request to an access network device (or a processing unit, configured to send a first request to the access network device through the sending unit), where the first request requests to subscribe to transmission information of a first quality of service QoS flow, and the transmission information of the first QoS flow indicates that transmission of the first QoS flow fails, or indicates a data packet that fails to be transmitted in the first QoS flow.

Embodiment 41: The communication apparatus according to Embodiment 40, where data of a first application is transmitted in the first QoS flow and a second QoS flow, and quality of service of the first QoS flow is lower than that of the second QoS flow.

Embodiment 42: The communication apparatus according to Embodiment 40 or 41, where the communication apparatus further includes a receiving unit, where
the receiving unit is configured to receive, from the access network device, second information of the data packet that fails to be transmitted in the first QoS flow (or the processing unit is further configured to receive, from the access network device through the receiving unit, second information of the data packet that fails to be transmitted in the first QoS flow);
the processing unit is further configured to determine, based on the second information, first information of the data packet that fails to be transmitted in the first QoS flow; and
the sending unit is further configured to send the first information to an application server (or the processing unit is further configured to send the first information to the application server through the sending unit), where the application server corresponds to the first application.

Embodiment 43: The communication apparatus according to Embodiment 42, where the second information includes one or more of the following information: a frame number of a frame corresponding to the data packet that fails to be transmitted, a type of the frame corresponding to the data packet that fails to be transmitted, a location of the data packet that fails to be transmitted in the frame, a quantity of data packets that fail to be transmitted, or sequence numbers of general packet radio service tunneling protocol GTP packet headers corresponding to M data packets, where the M data packets are the data packet that fails to be transmitted, or all data packets corresponding to the frame corresponding to the data packet that fails to be transmitted.

Embodiment 44: The communication apparatus according to Embodiment 43, where the second information includes the sequence numbers of the GTP packet headers corresponding to the M data packets, and the processing unit is configured to determine the first information based on the second information in the following manner: mapping the sequence numbers of the GTP packet headers to transmission control protocol TCP layer sequence numbers or internet protocol IP layer sequence numbers to obtain the first information, where the first information includes the TCP layer sequence numbers or the IP layer sequence numbers of the M data packets.

Embodiment 45: The communication apparatus according to any one of Embodiments 41 to 44, where the first information includes one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or the TCP layer sequence numbers or the IP layer sequence numbers of the M data packets, where the M data packets are the data packet that fails to be transmitted, or all the data packets corresponding to the frame corresponding to the data packet that fails to be transmitted.

Embodiment 46: A communication apparatus, including:
a receiving unit, configured to receive fifth information from a first communication apparatus (or a processing unit, configured to receive fifth information from the first communication apparatus through the receiving unit), where the fifth information indicates a data packet that the first communication apparatus fails to send in a first quality of service QoS flow; and
the processing unit, configured to generate a second data packet based on the fifth information, where a sequence number of the second data packet is the same as a sequence number of the data packet that fails to be sent.

Embodiment 47: The communication apparatus according to Embodiment 46, where data of a first application is transmitted in the first QoS flow and a second QoS flow, and quality of service of the first QoS flow is lower than that of the second QoS flow.

Embodiment 48: The communication apparatus according to Embodiment 46 or 47, where the receiving unit is configured to receive the fifth information in the following manner: receiving the fifth information from the first communication apparatus in the second QoS flow (or the processing unit is configured to receive the fifth information through the receiving unit in the following manner: receiving the fifth information from the first communication apparatus in the second QoS flow through the receiving unit).

Embodiment 49: An apparatus, including units for performing the method described in any one of embodiments of this application.

## Claims

1. A communication method, comprising:
determining first information of a data packet that fails to be transmitted in a first quality of service QoS flow; and
discarding some or all of the data packet that fails to be transmitted, and resetting a sequence number of an unsent data packet, so that the sequence number of the unsent data packet and a sequence number of a successfully sent data packet are consecutive.

2. The method according to claim 1, wherein the method further comprises:
discarding a remaining data packet corresponding to a frame corresponding to the data packet that fails to be transmitted, wherein the remaining data packet is a data packet, other than the data packet that fails to be transmitted, of all data packets corresponding to the frame.

3. The method according to claim 1 or 2, wherein data of a first application is transmitted in the first QoS flow and a second QoS flow, and a data packet transmitted in the first QoS flow is less important than a data packet transmitted in the second QoS flow.

4. The method according to any one of claims 1 to 3, wherein the first information comprises one or more of the following information: a frame number of the frame corresponding to the data packet that fails to be transmitted, a type of the frame corresponding to the data packet that fails to be transmitted, a location of the data packet that fails to be transmitted in the frame, a quantity of data packets that fail to be transmitted, or transmission control protocol TCP layer sequence numbers or internet protocol IP layer sequence numbers of M data packets, wherein the M data packets are the data packet that fails to be transmitted, or all the data packets corresponding to the frame corresponding to the data packet that fails to be transmitted.

5. The method according to any one of claims 1 to 4, wherein the determining first information of a data packet that fails to be transmitted in a first QoS flow comprises:
receiving the first information; or
determining the first information based on a data sending status of the first QoS flow; or
receiving second information of the data packet that fails to be transmitted in the first QoS flow, and determining the first information based on the second information.

6. The method according to claim 5, wherein the second information comprises one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or sequence numbers of general packet radio service tunneling protocol GTP packet headers corresponding to the M data packets, wherein the M data packets are the data packet that fails to be transmitted, or all the data packets corresponding to the frame corresponding to the data packet that fails to be transmitted.

7. The method according to claim 6, wherein the second information comprises the sequence numbers of the GTP packet headers corresponding to the M data packets, and the determining the first information based on the second information comprises:
mapping the sequence numbers of the GTP packet headers to the TCP layer sequence numbers or the IP layer sequence numbers to obtain the first information, wherein the first information comprises the TCP layer sequence numbers or the IP layer sequence numbers of the M data packets.

8. The method according to any one of claims 1 to 7, wherein the method further comprises:
retransmitting N data packets in the second QoS flow, wherein the N data packets belong to the data packet that fails to be transmitted, and the N data packets are some data packets corresponding to a frame of image of the first application.

9. The method according to any one of claims 1 to 8, wherein the method further comprises:
sending the unsent data packet when it is determined that a network is recovered to a normal state; or
sending the unsent data packet when a first timer expires.

10. The method according to claim 9, wherein the determining that a network is recovered to a normal state comprises:
receiving sixth information, wherein the sixth information indicates that the network is recovered to a normal state, or indicates to send a data packet.

11. The method according to claim 9, wherein the method further comprises:
receive third information, wherein the third information indicates timing duration of the first timer; or
determining timing duration of the first timer based on the data sending status of the first QoS flow.

12. The method according to any one of claims 1 to 11, wherein the method further comprises:
receiving fourth information, wherein the fourth information indicates a cause of the transmission failure; or determining a cause of the transmission failure based on the data sending status of the first QoS flow; and
determining, based on the cause of the transmission failure, that some or all of the data packet that fails to be transmitted is to be discarded.

13. The method according to claim 12, wherein the cause of the transmission failure comprises one or more of the following: network congestion, insufficient network resources, or discarding of a low-priority data packet.

14. The method according to any one of claims 1 to 13, wherein the method further comprises:
sending a first request to an access network device, wherein the first request requests to obtain transmission information of the first QoS flow, and the transmission information of the first QoS flow indicates that a data packet in the first QoS flow fails to be transmitted, or indicates a data packet that fails to be transmitted in the first QoS flow.

15. The method according to any one of claims 1 to 14, wherein the method further comprises:
determining that the data of the first application is transmitted in at least two QoS flows; and
establishing a first connection to a receive end of the at least two QoS flows, wherein the first connection comprises at least two subflows, the at least two subflows are transmitted in the at least two QoS flows, and the at least two QoS flows comprise the first QoS flow.

16. A communication method, comprising:
sending a first request to an access network device, wherein the first request requests to subscribe to transmission information of a first quality of service QoS flow, and the transmission information of the first QoS flow indicates that transmission of the first QoS flow fails, or indicates a data packet that fails to be transmitted in the first QoS flow.

17. The method according to claim 16, wherein data of a first application is transmitted in the first QoS flow and a second QoS flow, and quality of service of the first QoS flow is lower than that of the second QoS flow.

18. The method according to claim 16 or 17, wherein the method further comprises:
receiving, from the access network device, second information of the data packet that fails to be transmitted in the first QoS flow;
determining, based on the second information, first information of the data packet that fails to be transmitted in the first QoS flow; and
sending the first information to an application server, wherein the application server corresponds to the first application.

19. The method according to claim 18, wherein the second information comprises one or more of the following information: a frame number of a frame corresponding to the data packet that fails to be transmitted, a type of the frame corresponding to the data packet that fails to be transmitted, a location of the data packet that fails to be transmitted in the frame, a quantity of data packets that fail to be transmitted, or sequence numbers of general packet radio service tunneling protocol GTP packet headers corresponding to M data packets, wherein the M data packets are the data packet that fails to be transmitted, or all data packets corresponding to the frame corresponding to the data packet that fails to be transmitted.

20. The method according to claim 19, wherein the second information comprises the sequence numbers of the GTP packet headers corresponding to the M data packets, and the determining first information based on the second information comprises:
mapping the sequence numbers of the GTP packet headers to transmission control protocol TCP layer sequence numbers or internet protocol IP layer sequence numbers to obtain the first information, wherein the first information comprises the TCP layer sequence numbers or the IP layer sequence numbers of the M data packets.

21. The method according to any one of claims 18 to 20, wherein the first information comprises one or more of the following information: the frame number of the frame corresponding to the data packet that fails to be transmitted, the type of the frame corresponding to the data packet that fails to be transmitted, the location of the data packet that fails to be transmitted in the frame, the quantity of data packets that fail to be transmitted, or the TCP layer sequence numbers or the IP layer sequence numbers of the M data packets, wherein the M data packets are the data packet that fails to be transmitted, or all the data packets corresponding to the frame corresponding to the data packet that fails to be transmitted.

22. A communication method, comprising:
receiving fifth information from a first communication apparatus, wherein the fifth information indicates a data packet that the first communication apparatus fails to send in a first quality of service QoS flow; and
generating a second data packet based on the fifth information, wherein a sequence number of the second data packet is the same as a sequence number of the data packet that fails to be sent.

23. The method according to claim 22, wherein data of a first application is transmitted in the first QoS flow and a second QoS flow, and quality of service of the first QoS flow is lower than that of the second QoS flow.

24. The method according to claim 22 or 23, wherein the receiving fifth information comprises:
receiving the fifth information from the first communication apparatus in the second QoS flow.

25. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 15, or the communication device is enabled to perform the method according to any one of claims 16 to 21, or the communication device is enabled to perform the method according to any one of claims 22 to 24.

26. A computer-readable storage medium, wherein the computer-readable storage medium is configured to store a computer program; and when the computer program runs on a computer, the computer is enabled to perform the method according to any one of claims 1 to 15, or the computer is enabled to perform the method according to any one of claims 16 to 21, or the computer is enabled to perform the method according to any one of claims 22 to 24.

27. A chip, comprising one or more processors and a communication interface, wherein the one or more processors are configured to read instructions, to perform the method according to any one of claims 1 to 15, or perform the method according to any one of claims 16 to 21, or perform the method according to any one of claims 22 to 24.
